# EUROPÄISCHE PATENTSCHRIFT

(11) **EP 1 774 805 B1**
(45) Veröffentlichungstag und Bekanntmachung des Hinweises auf die Patenterteilung: **07.09.2011**
(21) Anmeldenummer: 05759103.4
(22) Anmeldetag: 06.07.2005
(51) Int. Cl.: H04W 8/20, H04W 4/12

(54) **VERFAHREN ZUM ÜBERTRAGEN APPLIKATIONSSPEZIFISCHER REGISTRIER-ODER DEREGISTRIERDATEN SOWIE SYSTEM, SERVER UND KOMMUNIKATIONSENDGERÄT HIERFÜR**
METHOD FOR TRANSMITTING APPLICATION-SPECIFIC REGISTRATION OR DE-REGISTRATION DATA AND SYSTEM, SERVER AND COMMUNICATION TERMINAL THEREFOR
PROCEDE POUR TRANSMETTRE DES DONNEES D'ENREGISTREMENT ET DE DESENREGISTREMENT SPECIFIQUES A UNE APPLICATION, ET SERVEUR ET TERMINAL DE COMMUNICATION CORRESPONDANTS

(30) Priorität: 02.08.2004 DE 102004037338
(43) Veröffentlichungstag der Anmeldung: 18.04.2007
(73) Patentinhaber: Infineon Technologies AG, 85579 Neubiberg (DE)
(72) Erfinder: LAUMEN, Josef, 81541 München (DE); SCHMIDT, Andreas, 38124 Braunschweig (DE)
(74) Vertreter: Viering, Hans-Martin
(86) Internationale Anmeldenummer: PCT/EP2005/007306
(87) Internationale Veröffentlichungsnummer: WO 2006/015672

(56) Entgegenhaltungen:
- 3GPP: "Multimedia Messaging Service MMS, stage 2" 3GPP TS 23.140 V.6.6.0, [Online] Juni 2004 (2004-06), XP002352055 Gefunden im Internet: URL:www.3gpp.org> [gefunden am 2005-11-02]
- NOKIA: "Compatibility in using MMS to transport application data" T2-040189 (3GPP TSG-T2 #25, EDINBURGH, UK), [Online] 19. April 2004 (2004-04-19), - 23. April 2004 (2004-04-23) XP002352056 Gefunden im Internet: URL:www.3gpp.org> [gefunden am 2005-11-02]
- 3GPP: "IP Multimedia Subsystem (IMS) stage 2" 3GPP TS 23.228 V6.6.6.0, [Online] Juni 2004 (2004-06), XP002352057 Gefunden im Internet: URL:www.3gpp.org> [gefunden am 2005-11-02]
- EICHHOLZ JAN: "LS on Application ID in MMS" T2-030389 (3GPP-TSG-T_WG2 3#22 CAMBRIDGE UK), [Online] 25. August 2003 (2003-08-25), - 29. August 2003 (2003-08-29) XP002352058 Gefunden im Internet: URL:www.3gpp.org> [gefunden am 2005-11-02]
- REYNOLDS F ET AL: "Composite Capability/preference Profiles (CC/PP): A user side framework for content negotiation" W3C NOTE, 27. Juli 1999 (1999-07-27), XP002257669

## Beschreibung

Die Erfindung betrifft ein Kommunikationssystem, ein Verfahren zum Steuern eines Kommunikationssystems, einen Server, ein Verfahren zum Betreiben eines Servers, ein Kommunikationsendgerät und ein Verfahren zum Betreiben eines Kommunikationsendgeräts.

Mobilfunk-Kommunikationssysteme gemäß dem GSM(Global System for Mobile Communications)-Standard ermöglichen neben Sprach-Kommunikationsverbindungen auch das Versendung und Empfangen von Textnachrichten von bis zu 160 Zeichen Länge mittels des SMS (Short Message Service).

Ein möglicher Nachfolger dieses einfachen und überaus erfolgreichen Kommunikationsdienstes ist der MMS (Multimedia Messaging Service), der beispielsweise in [1] und [2] beschrieben ist.

MMS ist ein Kommunikationsdienst, der das mobile Versenden und das mobile Empfangen von Nachrichten mit multimedialen Inhalten ermöglicht. Eine mittels des MMS übertragene Nachricht wird im Folgenden als Multimedia-Message (MM) bezeichnet.

Im Gegensatz zu SMS ist bei MMS der Inhalt von übertragenen Nachrichten nicht auf Text von 160 Zeichen Länge beschränkt.

Eine Multimedia-Message kann mehrere Multimedia-Elemente, das heißt Multimedia-Dateien, verschiedener Dateitypen (beispielsweise Audiodateien oder Standbilddateien) und verschiedener Dateiformate (beispielsweise GIF oder JPEG im Falle einer Standbilddatei) aufweisen.

MMS ermöglicht auch die Übertragung verhältnismäßig kleiner multimedialer Präsentationen mit einem zeitlich und/oder räumlich festgelegten Ablauf.

Auf Wunsch der Betreiber von GSM-Kommunikationssystemen, das heißt Mobilfunk-Kommunikationssystemen gemäß dem GSM-Standard, wurden für die Version 1.2 des MMS, deren Markteinführung derzeit kurz bevorsteht, MMS-Nachrichtenklassen definiert, wie es beispielsweise in [3] beschrieben ist.

Für eine Multimedia-Message einer bestimmten MMS-Nachrichtenklasse ist die maximale Datenmenge, die die Multimedia-Message enthalten kann festgelegt. Ferner ist festgelegt, von welchen Dateitypen und von welchen Dateiformaten Multimedia-Elemente sein dürfen, damit die Multimedia-Message diese Multimedia-Elemente enthalten darf.

Dateiformate werden typischerweise mittels MIME(Multi Purpose Intermail Extensions)-Content-Types, wie sie in [4] beschrieben sind, spezifiziert.

Auf Initiative der JAVA-Community, insbesondere der JSR-205 Expert Group (siehe z.B. http://www.jcp.org/en/home/index), werden im Rahmen des 3GPP (3rd Generation Partnership Project) Arbeiten unter der Bezeichnung "Application Addressing Schema" durchgeführt mit dem Ziel, das bei MMS verwendete Kommunikationsprotokoll zu erweitern, sodass MMS von Applikationen, das heißt Software-Applikationen, als Transportmedium (Träger) verwendet werden kann, das heißt, dass Dateien und Daten, die im Rahmen einer Applikation übertragen werden, mittels MMS übertragen werden können.

Es wird vermutlich ermöglicht, dass Applikationen, in deren Rahmen Daten mittels MMS übertragen werden, sowohl auf einem Netzwerkelement eines Mobilfunknetzwerks als auch auf einem mobilen Kommunikationsendgerät installiert sein können.

Um die im Rahmen einer Applikation durchgeführte Datenübertragung mittels MMS zu ermöglichen, wird vermutlich die Adressierung von Applikationen bei MMS ermöglicht, das heißt, dass eine Multimedia-Message unter Angabe einer Applikationsadresse, die eine Applikation adressiert, und/oder eines Applikationsidentifikators, der eine Applikation identifiziert, von einem Sender an die adressierte bzw. identifizierte Applikation gesendet werden kann.

Sobald dies der Fall ist, werden vermutlich mittels MMS Dateien mit Dateitypen oder Dateiformaten übertragen werden, die bis zu diesem Zeitpunkt nicht mittels MMS übertragen wurden, weil vermutlich eine Vielzahl von auf mobilen Kommunikationsendgeräten installierte Applikationen Daten applikationsspezifischer MIME-Content-Types empfangen und/oder versenden werden.

Dementsprechend werden vermutlich mittels MMS eine Vielzahl von Dateien mit Dateitypen und Dateiformaten übertragen werden, die von einer auf einem Kommunikationsendgerät installierten Applikation verwendet werden, aber von dem Kommunikationsendgerät "üblicherweise" nicht unterstützt werden, das heißt nicht verwendet werden können, wenn die Applikation nicht auf dem Kommunikationsendgerät installiert ist.

Ein herkömmlicher MMS-Relay/Server gemäß dem MMS-Standard kann nicht unterscheiden, ob es sich bei einer zu übertragenden Multimedia-Message um eine Multimedia-Message handelt, die eine Datei mit einem Dateityp oder einem Dateiformat enthält, die von einem Kommunikationsendgerät verwendet, das heißt verarbeitet, werden kann, also zum Beispiel auf dem Bildschirm des Kommunikationsendgeräts dargestellt werden kann, oder ob die Multimedia-Message als Transportcontainer verwendet wird und eine Datei mit einem Dateityp und/oder einem Dateiformat enthält, die speziell für eine auf dem Kommunikationsendgerät installierte Applikation bestimmt ist und von dem Kommunikationsendgerät nur mittels dieser Applikation verarbeitet werden kann.

Insbesondere besteht die Möglichkeit, dass ein MMS-Relay/Server im Rahmen einer sogenannten Inhaltsanpassung (engl.: Content Adaptation) auf Basis der ihm bekannten Informationen über ein Kommunikationsendgerät den Inhalt einer Multimedia-Message unter der Annahme, dass der Inhalt der Multimedia-Message nicht von dem Kommunikationsendgerät verarbeitet werden kann, löscht, obwohl der Inhalt von mindestens einer Applikation, die auf dem Kommunikationsendgerät installiert ist, verarbeitet werden kann.

Einem MMS-Relay/Server kann im Rahmen eines sogenannten UA-Prof (User Agent Profile) des Kommunikationsendgeräts, welches ein Profil des Kommunikationsendgeräts ist, die Information bekannt sein, dass das Kommunikationsendgerät Dateien eines bestimmten Dateityps nicht verarbeiten kann, und der MMS-Relay/Server könnte im Rahmen seiner Fähigkeit, Inhalte von Multimedia-Messages an die Fähigkeiten und Eigenschaften von Kommunikationsendgeräten anzupassen (Inhaltsanpassung, engl.: Content Adaptation), Dateien in Multimedia-Messages dieses Dateityps löschen, da dem MMS-Relay/Server nicht bekannt ist, dass auf dem Kommunikationsendgerät eine Applikation installiert ist, die diese Inhalte verarbeiten kann.

Dies kann erhebliche Qualitätsverluste und Datenverluste zur Folge haben.

Dieses Verhalten des MMS-Relay/Servers ist insbesondere dann von großem Nachteil, wenn dem Benutzer des Kommunikationsendgeräts für die Übertragung von Multimedia-Messages Kosten entstehen, weil er beispielsweise Abonnent bei einem Mehrwertdienstanbieter (VASP, Value Added Service Provider), der MMS als Transportmedium verwendet, ist.

Derzeit machen noch nicht viele MMS-Anbieter von der Möglichkeit der Inhaltsanpassung Gebrauch. Dies wird sich jedoch vermutlich mit der kurz bevorstehenden Einführung von MMS der Version 1.2 ändern.

In Druckschrift [3] sind die minimalen Anforderungen und Richtlinien für die Zusammenarbeit von MMS-Mobiltelefonen und MMS-Servern spezifiziert.

In [4] sind die verschiedenen Header spezifiziert, die zur Beschreibung der Struktur von MIME (Multi Purpose Internet Mail Extensions)-Nachrichten verwendet werden.

In [5] ist das UA-Prof (User Agent Profile) spezifiert. Das UA-Prof wurde von dem WAP(Wireless Application Protocol)-Forum standardisiert, damit einem Server in einem Kommunikationssystem Informationen über die Eigenschaften eines, beispielsweise mobilen, Kommunikationsendgeräts mitgeteilt werden können. Anschaulich können somit die Eigenschaften eines mobilen Kommunikationsendgeräts, das heißt eines Mobilfunk-Kommunikationsendgeräts, in einem Mobilfunksystem netzwerkseitig bekannt gemacht werden. Das UA-Prof, das ursprünglich zum mobilen Durchstöbern (Browsen) des Internets entwickelt worden ist, wird derzeit auch für andere mobile Kommunikationsdienste, das heißt Mobilfunk-Kommunikationsdienste, beispielsweise MMS, verwendet.

Die Weiterentwicklung des UA-Prof-Standards wird derzeit von der OMA (Open Mobile Alliance) durchgeführt.

Unter Verwendung von UA-Prof können einem Server auch zusätzliche Eigenschaften von weiteren Komponenten eines Kommunikationssystems mitgeteilt werden, beispielsweise eines zwischen dem Server und einem Kommunikationsendgerät gekoppelten WAP-Gateways, welche die zwischen dem Server und dem Kommunikationsendgerät transferierten Daten handhaben und dabei verändern können.

Gemäß dem Stand der Technik wird dazu ein sogenanntes resultierendes Profil an den Server übertragen. Es ist jedoch für den Server nicht erkenntlich, ob die in dem resultierenden Profil enthaltenen Informationen Eigenschaften der weiteren Komponenten oder des Kommunikationsendgeräts spezifizieren, sondern es werden anschaulich alle spezifizierten Eigenschaften der Übertragungskette zwischen dem Kommunikationsendgerät und dem Server als Eigenschaften des Kommunikationsendgeräts betrachtet und somit das übertragene resultierende Profil als Profil des Kommunikationsendgeräts interpretiert.

In Druckschrift [6] ist XML (Extensible Markup Language) beschrieben.

In [7] wird der Austausch von MMS Protocol Data Units (PDUs) zwischen einem Endgerät und einer Netzwerkeinheit beschrieben.

Druckschrift [8] beschreibt eine Sprachen-Marke (language tag) zur Verwendung in Fällen, in denen es gewünscht wird, die Sprache, die für ein Informationsobjekt verwendet wird, anzuzeigen.

[9] ist eine Druckschrift des 3GPP, in der Protokolle und Codecs für den Packet-Switched-Streaming-Service (PSS) spezifiziert sind.

Druckschrift [10] offenbart ein Verfahren und eine Vorrichtung zum intelligenten Transcodieren, das heißt Konvertieren, von Multimediadaten zwischen zwei Netzwerkelementen, wobei Transcodierungshinweise gespeichert und übermittelt werden.

In [11] sind eine Vorrichtung und ein Verfahren zum Übertragen von Information mittels einer Kommunikationsverbindung zu einem Client offenbart, wobei die Information basierend auf den Eigenschaften des Client und der Kommunikationsverbindung in ein Format konvertiert wird und in diesem Format übertragen wird.

Druckschrift [12] offenbart ein Verfahren zum Übermitteln einer Nachricht mit speziellem Inhalt an ein Endgerät, wobei ein Spezialanwendungs-Service-Center mittels einer Kurznachricht das Endgerät über die Art der Nachricht informiert und das Spezialanwendungs-Service-Center die Nachricht in Abhängigkeit von der Reaktion des Endgeräts an das Endgerät oder beispielsweise an eine Webeseite zum späteren Zugriff mittels eines Passworts sendet.

In [13] ist ein Verfahren zum Bereitstellen von Signalen eines codierten Standbilds an ein Endgerät offenbart, wobei ein Netzwerkelement eines Kommunikationssystems die Signale empfängt und mindestens teilweise konvertiert und sie an das Endgerät sendet.

Druckschrift [14] beschreibt ein Kommunikationssystem, bei dem eine Client-Einheit ihre Daten-Verarbeitungs-Fähigkeit, beispielsweise die Charakteristika der Anzeige-Einheit der Client-Einheit oder auch mögliche Charakteristika eines Lautsprechers oder allgemein der jeweils verarbeitbaren Datenformate an eine Daten-Formatiereinheit überträgt. Multimedia-Daten werden client-spezifisch von der Formatiereinheit hinsichtlich der Client-Charakteristika konvertiert und dann an die jeweilige Client-Einheit übermittelt.

Die Druckschrift [15] beschreibt, dass die Fähigkeiten(capability)-Information eines MMS User Agents eine Liste von unterstützten Applikationen aufweisen kann. Somit offenbart Druckschrift [15] (ähnlich wie Druckschrift [2]) die Verwendung einer Liste zur Signalisierung von Fähigkeiten.

Druckschrift [16] beschreibt das Registrieren und Deregistrieren eines Endgeräts im IMS (IP Multimedia Subsystem).

In Druckschrift [17] ist ein Anwendungs-Adressierungsverfahren für den Austausch von Multimedia-Nachrichten zwischen MMS User Agents beschrieben.

Druckschrift [18] beschreibt die Verwendung eines Ressourcen-Beschreibungsformats zum Beschreiben von Benutzerpräferenzen und Gerätefähigkeiten.

Der Erfindung liegt das Problem zu Grunde, es zu ermöglichen, dass MMS als Transportmedium für eine auf einem Kommunikationsendgerät installierte Applikation verwendet werden kann.

Das Problem wird durch ein Verfahren zum Steuern eines Kommunikationssystems, einen Server, ein Verfahren zum Betreiben eines Servers, ein Kommunikationsendgerät und ein Verfahren zum Betreiben eines Kommunikationsendgeräts mit den Merkmalen gemäß den unabhängigen Patentansprüchen gelöst.

Es wird ein Kommunikationssystem mit einem Kommunikationsendgerät und einem Server bereitgestellt, wobei das Kommunikationsendgerät eine Signalisierungseinrichtung aufweist, die eingerichtet ist, ein boolesches Informationselement an den Server zu übermitteln, das spezifiziert, ob mindestens eine auf dem Kommunikationsendgerät installierte Applikation MMS als Transportmedium zur Übertragung von Daten verwendet; und der Server eine Steuereinrichtung aufweist, die eingerichtet ist, in Abhängigkeit des übertragenen Informationselements eine Steueraktion durchzuführen.

Ferner werden ein Verfahren zum Steuern eines Kommunikationssystems, ein Server, ein Verfahren zum Betreiben eines Servers, ein Kommunikationsendgerät und ein Verfahren zum Betreiben eines Kommunikationsendgeräts gemäß dem oben beschriebenen Kommunikationssystem bereitgestellt.

Anschaulich kann eine der Erfindung zu Grunde liegende Idee darin gesehen werden, dass das Kommunikationsendgerät eine auf dem Kommunikationsendgerät installierte Applikation bei dem Server registriert (oder anmeldet) oder eine auf dem Kommunikationsendgerät deinstallierte Applikation bei dem Server deregistriert (oder abmeldet).

Unter einer Applikation ist eine Software-Applikation zu verstehen, die auf dem Kommunikationsendgerät installiert ist, beispielsweise eine Spiele-Applikation, in deren Rahmen Daten übertragen werden, um ein Spiel mit mehreren Spielern zu ermöglichen, oder eine Banking-Applikation, die beispielsweise das sichere Tätigen von Überweisungen ermöglicht.

Bevorzugte Weiterbildungen der Erfindung ergeben sich aus den abhängigen Ansprüchen. Die weiteren Ausgestaltungen der Erfindung, die im Zusammenhang mit dem Kommunikationssystem beschrieben sind, gelten sinngemäß auch für das Verfahren zum Steuern eines Kommunikationssystems, den Server, das Verfahren zum Betreiben eines Servers, das Kommunikationsendgerät und das Verfahren zum Betreiben eines Kommunikationsendgeräts.

Es ist bevorzugt, dass der Server eine Übertragungsvorrichtung aufweist, die eingerichtet ist, Nachrichten an das Kommunikationsendgerät zu übertragen, und eine Konvertierungseinrichtung aufweist, die eingerichtet ist, an das Kommunikationsendgerät zu übertragende Nachrichten zu konvertieren, und die Steueraktion das Aktivieren oder das Deaktivieren einer Konvertierung durch die Konvertierungseinrichtung von mittels der Übertragungsvorrichtung des Servers an das Kommunikationsendgerät zu übertragenden Nachrichten ist.

Anschaulich weist somit vorzugsweise der Server eine Steuereinheit auf, die eingerichtet ist, das Aktivieren oder das Deaktivieren einer Konvertierung durch die Konvertierungseinrichtung zu beeinflussen. Unter "Steueraktion" ist somit beispielsweise das Aktivieren bzw. Deaktivieren einer Konvertierung von mittels der Übertragungsvorrichtung des Servers an das Kommunikationsendgerät zu übertragenden Nachrichten durch die Konvertierungseinrichtung zu verstehen.

Eine Konvertierung einer Nachricht ist beispielsweise eine Inhaltsanpassung der Nachricht, beispielsweise die Inhaltsanpassung (engl.: Content Adaptation) gemäß dem MMS, eine Änderung des Dateityps einer in der Nachricht enthaltenen Datei oder eine Änderung des Dateiformats einer in der Nachricht enthaltenen Datei.

Anschaulich signalisiert das Kommunikationsendgerät dem Server, dass keine Konvertierung von Nachrichten durchzuführen ist, die an das Kommunikationsendgerät übertragen werden.

Vorzugsweise weist die Steueraktion ferner das Bestimmen auf, welche mittels der Übertragungsvorrichtung des Servers an das Kommunikationsendgerät zu übertragende Nachrichten von der Konvertierungseinrichtung (ganz oder teilweise) zu konvertieren sind.

Anschaulich kann das Kommunikationsendgerät signalisieren, welche Nachrichten konvertiert werden sollen, beispielsweise alle von einem bestimmten Absender gesendeten Nachrichten, alle Nachrichten, die Dateien eines bestimmten Dateityps und/oder Dateiformats enthalten oder alle Nachrichten, die zu einem bestimmten Zeitpunkt oder innerhalb eines bestimmten Zeitfensters übertragen werden.
Insbesondere kann eine Registrierung oder eine Deregistrierung einer Applikation aus der Signalisierung bestehen, dass keine bzw. dass eine Konvertierung von an das Kommunikationsendgerät zu übertragende Nachrichten durchzuführen ist und/oder welche an das Kommunikationsendgerät zu übertragende Nachrichten ganz oder teilweise konvertiert werden sollen.

Es ist bevorzugt, dass die Konvertierungseinrichtung eingerichtet ist, Nachrichten zu konvertieren, die gemäß einem Multimedia-Übertragungsprotokoll mittels der Übertragungsvorrichtung an das Kommunikationsendgerät zu übertragen sind.

Es ist bevorzugt, dass die Signalisierungseinrichtung eingerichtet ist, die applikationsspezifischen Registrier- oder Deregistrierdaten gemäß einem Multimedia-Übertragungsprotokoll an den Server zu übertragen.

Vorzugsweise ist das Multimedia-Übertragungsprotokoll das Übertragungsprotokoll des MMS.
Anschaulich kann eine weitere der Erfindung zu Grunde liegende Idee darin gesehen werden, dass das Registrieren und Deregistrieren der Applikation mittels MMS durchgeführt wird.

Im Falle der Anwendung der Erfindung im Rahmen des MMS kann beispielsweise ein MMS-Relay/Server davon in Kenntnis gesetzt werden, dass auf einem Kommunikationsendgerät eine Applikation installiert ist, die MMS als Transportmedium verwendet. Somit kann insbesondere eine unerwünschte Inhaltsanpassung einer mittels des MMS-Relay/Servers an das Kommunikationsendgerät zu übertragenen Nachricht, beispielsweise das unerwünschte Löschen einer in der zu übertragenen Nachricht enthaltenen Datei und/oder das unerwünschte Konvertieren des Dateityps und/oder des Dateiformats einer in der zu übertragenen Nachricht enthaltenen Datei im MMS-Relay/Server temporär oder dauerhaft vermieden werden.

In diesem Fall ist der Server ein MMS-Relay/Server und kann eine Multimedia-Message, die für eine auf dem Kommunikationsendgerät installierte Applikation bestimmte Daten enthält, anhand des Nachrichtenkopfes der Multimedia-Message, insbesondere auf Basis von Nachrichtenkopffeldern, die speziell für den Fall des Adressierens von Applikationen in die Multimedia-Message eingefügt worden sind, erkennen und gesondert handhaben, beispielsweise kann er wie oben erläutert entscheiden, dass sie nicht konvertiert wird. Analog kann ein auf dem Kommunikationsendgerät installierter MMS-User-Agent, welcher ein auf dem Kommunikationsendgerät installiertes Software-Programm ist, dass die Nutzung von MMS ermöglicht, anhand des Nachrichtenkopfes der Multimedia-Message, insbesondere auf Basis von Nachrichtenkopffeldern, die speziell für den Fall des Adressierens von Applikationen in die Multimedia-Message eingefügt worden sind, die Applikation erkennen und nicht dem Anwender präsentieren, beispielsweise graphisch anzeigen, sondern unmittelbar an die Applikation weiterleiten.

Alternativ oder in Ergänzung dazu kann auch der MMS-Relay/Server mittels mindestens eines neuen Nachrichtenkopffeldes im Nachrichtenkopfes der Multimedia-Message dem MMS-User-Agent anzeigen, dass die Multimedia-Message nicht dem Anwender präsentiert, beispielsweise graphisch angezeigt, sondern unmittelbar an die Applikation weitergeleitet werden soll.

Es ist bevorzugt, dass die Signalisierungseinrichtung eingerichtet ist, die applikationsspezifischen Registrier- oder Deregistrierdaten in Form eines Profils des Kommunikationsendgeräts zu übertragen.

Anschaulich übermittelt das Kommunikationsendgerät somit ein Profil, das anschaulich angibt, dass das Kommunikationsendgerät im Stande ist, Nachrichten bestimmter Art zu verarbeiten, da eine Applikation auf dem Kommunikationsendgerät installiert ist, und deshalb der Server beispielsweise keine Konvertierung dieser Nachrichten durchführen soll, da nach einer Konvertierung die Nachrichten eventuell von der Applikation eventuell nicht mehr verwendet werden können, was Datenverlust zur Folge haben kann. Vorzugsweise ist das Profil gemäß dem UA-Prof-Standard ausgestaltet, wie in [5] beschrieben.

Eine weitere der Erfindung zu Grunde liegende Idee kann in einer Registrierung einer auf dem Kommunikationsendgerät oder einer anderen Einheit des Kommunikationssystems, beispielsweise einem MMS-Relay/Server, installierten Applikation bei der Einheit, auf dem die Applikation installiert ist, gesehen werden.

In einer unten beschriebenen Ausführungsform besteht dieser Registrierungsprozess aus der Bekanntgabe an die Einheit, auf der die Applikation installiert ist, (oder dem Aushandeln zwischen der Einheit, auf dem die Applikation installiert ist, und der Applikation) einer Applikationsidentifikation und/oder einer Applikationsadresse der Applikation und eventuell der Übergabe von Zusatzinformation in Form der Werte zusätzlicher Parameter von der Applikation an die Einheit, auf der die Applikation installiert ist. Diese Zusatzinformation wird zur Regelung des bidirektionalen Datenaustausches zwischen der Applikation und der Einheit, auf der die Applikation installiert ist, verwendet, beispielweise dann, wenn die Applikation (Nutz-)Daten via MMS versenden oder die Einheit via MMS empfangene (Nutz-)Daten an die Applikation weiterreichen möchte.

Ausführungsbeispiele der Erfindung sind in den Figuren dargestellt und werden im Weiteren näher erläutert.
- Figur 1: zeigt ein Kommunikationssystem gemäß einem Ausführungsbeispiel der Erfindung.
- Figur 2: zeigt ein Nachrichtenflussdiagramm gemäß einem Ausführungsbeispiel der Erfindung.
- Figur 3: zeigt ein Nachrichtenflussdiagramm gemäß einem Ausführungsbeispiel der Erfindung.
- Figur 4: zeigt ein Nachrichtenflussdiagramm gemäß einem Ausführungsbeispiel der Erfindung.

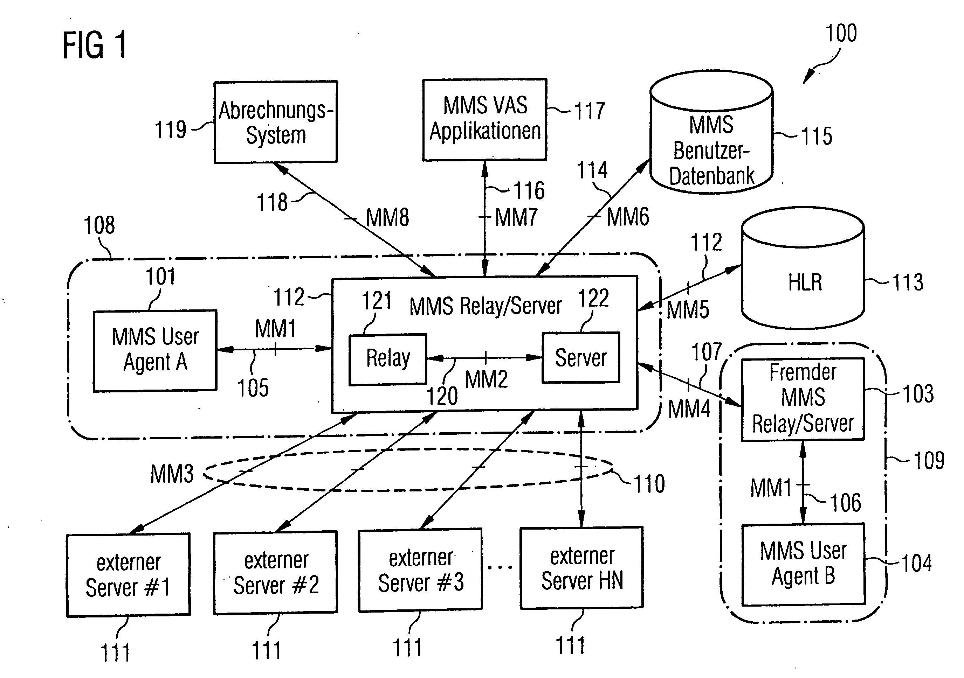

Fig.1 zeigt ein Kommunikationssystem 100 gemäß einem Ausführungsbeispiel der Erfindung.

Das Kommunikationssystem 100 ist gemäß der im Rahmen des 3GPP spezifizierten MMS-Kommunikationsnetzwerk-Architektur ausgestaltet.

Ein erster MMS-User-Agent 101 ist mittels eines ersten MMS Relay/Servers 102 und eines zweiten MMS-Relay/Servers 103 mit einem zweiten MMS-User-Agent 104 gekoppelt.

Ein MMS-User-Agent 101, 104 ist ein Software-Programm, das beispielsweise auf einem Mobilfunk-Teilnehmergerät, auf einem an ein Mobilfunk-Teilnehmergerät angeschlossenen Gerät, beispielsweise auf einem Laptop, oder auf einem anderen Kommunikationsendgerät ausgeführt wird und MMS realisiert, das heißt die Nutzung von MMS ermöglicht.

Der erste MMS-User-Agent 101 ist mit dem ersten MMS-Relay/Server 102 mittels einer ersten Schnittstelle 105, die mit MM1 bezeichnet wird, gekoppelt.

Der zweite MMS-User-Agent 104 ist mittels einer zweiten Schnittstelle 106, die ebenfalls mit MM1 bezeichnet wird, mit dem zweiten MMS-Relay/Server 103 gekoppelt.

Der erste MMS-Relay/Server 102 ist mittels einer dritten Schnittstelle 107, die mit MM4 bezeichnet wird, mit dem zweiten MMS-Relay/Server 103 gekoppelt.

Der erste MMS-Relay/Server 102 befindet sich in einem ersten Zuständigkeitsbereich (Multimedia Messaging Service Environment, MMSE) 108 eines ersten MMS-Dienstleistungsanbieters (MMS-Providers) und der zweite MMS-Relay/Server 103 befindet sich in einem zweiten Zuständigkeitsbereich 109 eines zweiten MMS-Dienstleistungsanbieters.

Ein MMS-Relay/Server 102, 104 ist ein Netzwerkelement, das in einem Zuständigkeitsbereich 108, 109 eines MMS-Dienstleistungsanbieters den MMS-User-Agents, die sich in dem Zuständigkeitsbereich 108, 109 befinden, das heißt die auf Kommunikationsendgeräten ausgeführt werden, die sich in dem Zuständigkeitsbereich befinden, den Kommunikationsdienst MMS bereitstellt.

Der erste MMS-User-Agent 101 befindet sich in dem ersten Zuständigkeitsbereich 108 und der zweite MMS-User-Agent 104 befindet sich in dem zweiten Zuständigkeitsbereich 109.

Ein MMS-Relay/Server 102, 104 hat die Fähigkeit, Inhalte einer Multimedia-Message an die Fähigkeiten und Eigenschaften eines Kommunikationsendgeräts anzupassen, was als Inhaltsanpassung (engl.: Content Adaptation) bezeichnet wird.

Beispielsweise kann der erste MMS-Relay/Server 102 eine Datei eines Dateityps oder eines Dateiformats löschen, wenn ihm die Information vorliegt, dass das Kommunikationsendgerät, an das eine Multimedia-Message, die diese Datei enthält, übertragen wird, Dateien dieses Dateityps oder dieses Dateiformats nicht verarbeiten kann.

Eine andere Möglichkeit einer Inhaltsanpassung (engl.: Content Adaptation) besteht darin, dass ein MMS-Relay/Server 102, 104 eine Datei in einer Multimedia-Message, die an ein Kommunikationsendgerät bzw. einen User-Agent, der auf dem Kommunikationsendgerät ausgeführt wird, übertragen wird, konvertiert, das heißt die Datei so verändert, dass sie solch einen Dateityp und solch ein Dateiformat aufweist, dass sie von dem Kommunikationsendgerät verarbeitet werden kann. Diese Konvertierung wird auch als Transcodierung bezeichnet.

In dieser Ausführungsform liegen die Informationen über die Fähigkeiten und Eigenschaften des Kommunikationsendgeräts, das den ersten MMS-User-Agent 101 aufweist, und des zweiten Kommunikationsendgeräts, das den zweiten MMS-User-Agent 104 aufweist, dem ersten MMS-Relay/Server 102 und dem zweiten MMS-Relay/Server 103 jeweils in Form eines Kommunikationsendgerätprofils des Kommunikationsendgeräts, das gemäß dem unten beschriebenen UA-Prof(User Agent Profile)-Standard ausgestaltet ist, vor.

Mittels einer vierten Schnittstelle 110, die mit MM3 bezeichnet wird, sind weitere Server 111 mit dem ersten MMS-Relay/Server 102 gekoppelt. Die weiteren Server 111 sind externe Server, die beispielsweise Email-Kommunikationsdienste, Fax-Kommunikationsdienste oder UMS (Unified Messaging)-Kommunikationsdienste bereitstellen.

Aus Sicht des ersten MMS-Relay/Servers 102 wird der zweite MMS-Relay/Server 103 von einem fremden MMS-Dienstleistungsanbieter betrieben.

Anschaulich kann somit die zweite Schnittstelle 107 als Mittel der Anbindung fremder MMS-Dienstanbieter gesehen werden.

Mittels einer fünften Schnittstelle 112, die mit MM5 bezeichnet wird, ist ein HLR (Home Location Register) 113 mit dem ersten MMS-Relay/Server 102 gekoppelt.

Das HLR 113 ist ein Teil eines Mobilfunk-Kommunikationssystems, mittels welchem der erste MMS-Relay/Server 102 mit dem ersten MMS-User-Agent 101 kommuniziert, das heißt anschaulich, das mittels des Mobilfunks-Kommunikationssystems die erste Schnittstelle 105 bereitgestellt wird.

Der erste MMS-User-Agent 101 ist auf einem Teilnehmergerät des Mobilfunk-Kommunikationssystems implementiert, das den HLR 113 aufweist.

Das Mobilfunk-Kommunikationssystem ist beispielsweise gemäß dem GSM-Standard oder dem UMTS(Universal Mobile Telecommunications System)-Standard ausgestaltet.

In dem HLR 113 sind die individuellen Kundendaten des Benutzers des Kommunikationsendgeräts, auf dem der erste MMS-User-Agent 101 implementiert ist und ausgeführt wird, gespeichert. Das HLR 113 befindet sich typischerweise im Zuständigkeitsbereich des Mobilfunk-Kommunikationssystems, der nicht mit dem ersten Zuständigkeitsbereich 108 oder dem zweiten Zuständigkeitsbereich 109 identisch sein muss.

Mittels einer sechsten Schnittstelle 114, die mit MM6 bezeichnet wird, ist eine (oder mehrere) MMS-Benutzerdatenbank (MMS User Database) 115 mit dem ersten MMS-Relay/Server 102 gekoppelt.

Mittels einer siebten Schnittstelle 116, die mit MM7 bezeichnet wird, ist ein Mehrwertdienst(Value Added Service, VAS)-Server 117 eines Mehrwertdienstanbieters (Value Added Service Provider, VASP) mit dem ersten MMS-Relay/Server 102 gekoppelt.

Mittels des Mehrwertdienst-Servers 117 werden dem Benutzer des ersten MMS-User-Agents 101 und eventuell weiteren Benutzern des mittels des ersten MMS-Relay/Servers 102 bereitgestellten MMS Mehrwertdienste (Value Added Services, VAS) bereitgestellt. Ein Mehrwertdienst ist ein Kommunikationsdienst, der über die reine Bereitstellung einer Kommunikationsverbindung hinausgeht, beispielsweise die Übermittlung von Börsenkursen oder eine Telefonnummern-Auskunft.

Mittels einer achten Schnittstelle 118, die mit MM8 bezeichnet wird, ist ein Abrechnungssystem 119 mit dem ersten MMS-Relay/Server 102 gekoppelt, mittels welchem alle relevanten Informationen zum Vergebühren des MMS gesammelt und ausgewertet werden.

Eine neunte Schnittstelle 120, die das Relay-Element 121 des ersten MMS-Relay/Servers 102 und das Server-Element 122 des ersten MMS-Relay/Servers 102 koppelt, wird mit MM2 bezeichnet.

Das Kommunikationssystem 100 kann weitere Schnittstellen aufweisen.

Derzeit werden in den Standardisierungsgremien Schnittstellen mit den Bezeichnungen MM9 und MM10 diskutiert.

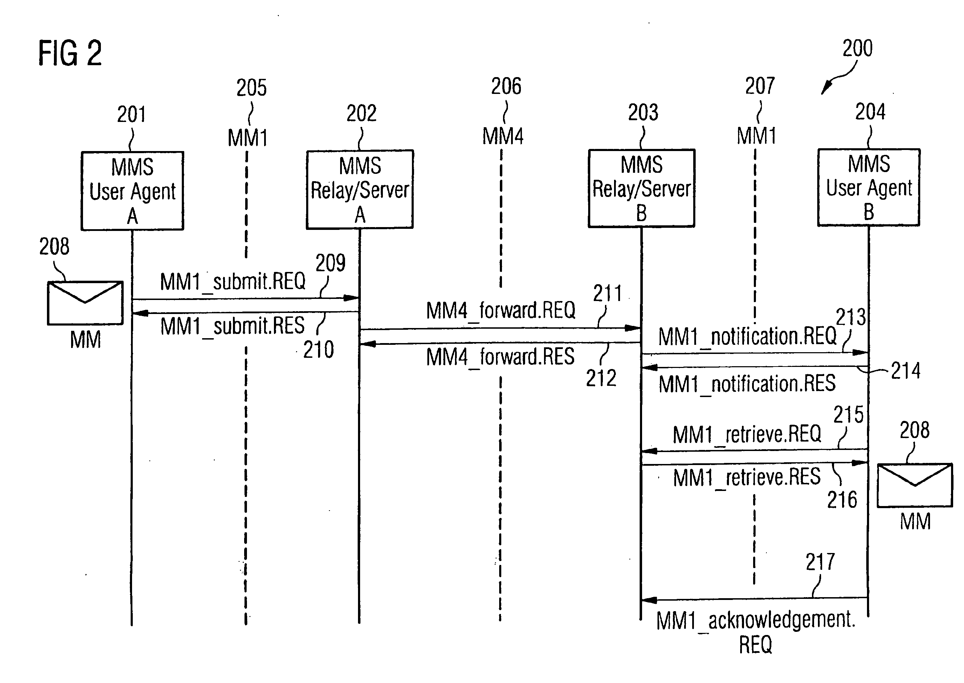

Fig.2 zeigt ein Nachrichtenflussdiagramm 200 gemäß einem Ausführungsbeispiel der Erfindung.

Der in Fig.2 dargestellte Nachrichtenfluss findet zwischen einem ersten MMS-User-Agent 201, einem ersten MMS-Relay/Server 202, einem zweiten MMS-Relay/Server 203 sowie einem zweiten MMS-User-Agent 204 statt, die wie oben mit Bezug auf Fig.1 beschrieben angeordnet und ausgestaltet sind.

Der in Fig.2 dargestellte Nachrichtenfluss wird mittels einer ersten Schnittstelle 205, einer zweiten Schnittstelle 206 und einer dritten Schnittstelle 207 durchgeführt, die wie mit Bezug auf Fig.1 beschrieben angeordnet und ausgestaltet sind.

Das Nachrichtenflussdiagramm 200 illustriert den Nachrichtenfluss und den Datenaustausch zwischen den MMS-User-Agents 201, 204 und den MMS-Relay/Servers 202, 204 beim Übertragen einer Multimedia-Message 208. Der in dem Nachrichtenflussdiagramm 200 dargestellte Nachrichtenfluss ist gemäß dem Transaction-Flow-Diagramm des 3GPP ausgestaltet, wie es beispielsweise in [2] beschrieben ist.

Insbesondere sind die im Rahmen des dargestellten Nachrichtenflusses übertragenen Nachrichten gemäß den in [2] definierten 3GPP-Abstract-Messages ausgestaltet.

Die im Rahmen des dargestellten Nachrichtenflusses übertragenen Nachrichten weisen jeweils mindestens ein Nachrichtenkopffeld (Information Element) auf. In Schritt 209 sendet der erste MMS-User-Agent 201, der der Absender der Multimedia-Message 208 ist, mittels der ersten Schnittstelle 205, die beispielsweise eine Luftschnittstelle ist, die Multimedia-Message 208 an den ersten MMS-Relay/Server 202 mittels einer MM1_submit.REQ-Nachricht.

In Schritt 210 bestätigt der erste MMS-Relay/Server 202 den korrekten Empfang der Multimedia-Message 208 von dem ersten MMS-User-Agent 201 mittels einer MM1_submit.RES-Nachricht.

Analog zu Schritt 209 wird im Schritt 211 die Multimedia-Message 208 von dem ersten MMS-Relay/Server 202 zu dem zweiten MMS-Relay/Server 203 mittels einer MM4_forward.REQ-Nachricht und der zweiten Schnittstelle 206 übermittelt und der korrekte Empfang der Multimedia-Message 208 wird im Schritt 212 von dem zweiten MMS-Relay/Server 203 mittels einer MM4_forward.RES-Nachricht und der zweiten Schnittstelle 206 bestätigt.

Der zweite MMS-User-Agent 204, der der Empfänger der Multimedia-Message 208 ist, wird in Schritt 213 mittels einer MM1_notification.REQ-Nachricht und der dritten Schnittstelle 207 darüber informiert, dass die Multimedia-Message 208 zum Herunterladen bereitgestellt ist.

In der MM1_notification.REQ-Nachricht ist eine Referenz auf den Speicherplatz der Multimedia-Message 208 im Zuständigkeitsbereich (MMSE), zu dem der zweite MMS-Relay/Server 203 gehört, in Form eines URI (Uniform Ressource Identifier) enthalten.

In Schritt 214 wird der korrekte Empfang der MM1_notification.REQ-Nachricht von dem zweiten MMS-User-Agent 204 mittels einer MM1_notification.RES-Nachricht und der dritten Schnittstelle 207 bestätigt.

In Schritt 215 initiiert der zweite MMS-User-Agent 204 mittels einer MM1_retrieve. REQ-Nachricht und der dritten Schnittstelle 207 das Herunterladen der auf dem zweiten MMS-Relay/Server 203 bereitliegenden Multimedia-Message 208.

In Schritt 216 erfolgt die Zustellung der Multimedia-Message 208 von dem zweiten MMS-Relay/Server 203 an den zweiten MMS-User-Agent 204 mittels einer MM1_retrieve.RES-Nachricht und der dritten Schnittstelle 207.

In Schritt 217 informiert der zweite MMS-User-Agent 204 den zweiten MMS-Relay/Server 203 mittels einer MM1_acknowledgement.REQ-Nachricht und der dritten Schnittstelle 207 über den Ausgang der in Schritt 216 durchgeführten Zustellung der Multimedia-Message 208, das heißt über den Ausgang des Herunterladens der Multimedia-Message 208.

Gemäß dem MMS-Standard können noch weitere Nachrichten ausgetauscht werden.

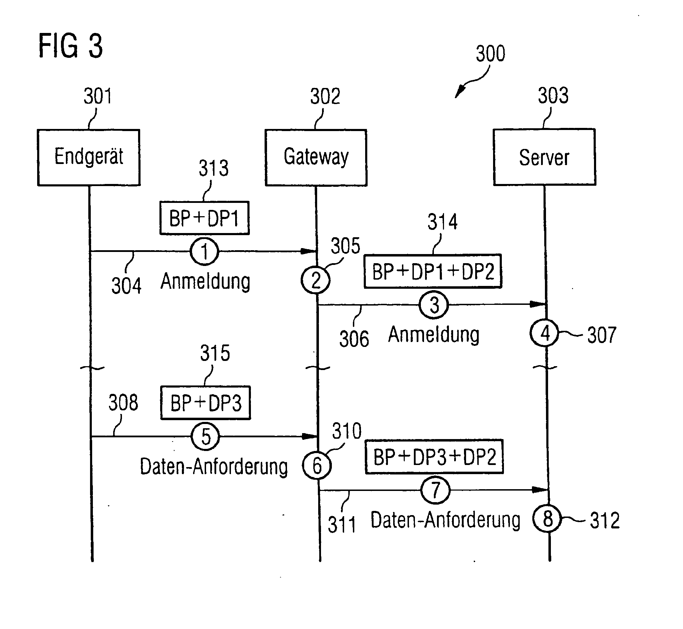

Fig.3 zeigt einen Nachrichtenflussdiagramm 300 gemäß einem Ausführungsbeispiel der Erfindung.

Der in Fig.3 dargestellte Nachrichtenfluss findet zwischen einem Kommunikationsendgerät 301, einem Gateway-Rechner 302 und einem Server 303 statt.

Das Kommunikationsendgerät 301 ist beispielsweise ein Teilnehmergerät eines Mobilfunk-Kommunikationssystems, auf dem der erste MMS-User-Agent 101 implementiert ist, der oben mit Bezug auf Fig.1 beschrieben ist.

Der Server 303 ist beispielsweise der erste MMS-Relay/Server 102, der oben mit Bezug auf Fig.1 beschrieben ist.

Der Gateway-Rechner 302 ist beispielsweise ein Gateway-Rechner, mittels welchem die Datenübertragung zwischen dem Kommunikationsendgerät 301 und dem Server 303 durchgeführt wird, beispielsweise ist es ein Teil der ersten Schnittstelle 105, die oben mit Bezug auf Fig.1 beschrieben ist (entspricht der dritten Schnittstelle 207 in Fig.2).

Der Gateway-Rechner 302 ist beispielsweise ein WAP(Wireless Application Protocol)-Gateway-Rechner.

Kommunikationsendgeräte, wie beispielsweise das Kommunikationsendgerät 301, unterscheiden sich typischerweise durch ihre Eigenschaften und Fähigkeiten voneinander. So können beispielsweise die Eigenschaften der Anzeigevorrichtungen der Kommunikationsendgeräte, beispielsweise hinsichtlich der Anzeigegröße, der Farbpalette und der Auflösung der Anzeigevorrichtungen, oder die Fähigkeiten der Kommunikationsendgeräte, Dateien eines bestimmten Dateityps und/oder Dateiformats darstellen und/oder verarbeiten zu können, unterschiedlich sein.

Der in Fig.3 dargestellte Nachrichtenfluss dient dazu, Informationen über die Fähigkeiten und Eigenschaften des Kommunikationsendgeräts 301 an den Server 303 zu übertragen.

Dies geschieht unter Verwendung eines Kommunikationsendgerätprofils, das gemäß dem UA-Prof (User-Agent Profil) ausgestaltet ist, das von dem WAP (Wireless Application Protocol)-Forum standardisiert worden ist.

Ferner werden mittels des Nachrichtenflusses dem Server 303 auch die Fähigkeiten des Gateways 302 mitgeteilt, der die zwischen dem Server 303 und dem Kommunikationsendgerät 301 transferierten Daten handhabt und dabei auch verändern kann.

Im Folgenden wird mit Bezug auf Fig.3 beschrieben, wie dem Server 303 das aktuelle Kommunikationsendgerätprofil des Kommunikationsendgeräts 301 mitgeteilt wird.

In Schritt 304 wird beispielsweise bei der Anmeldung des Kommunikationsendgeräts 301 bei dem Server 303 oder bei dem Aufbau einer Kommunikationsverbindung zwischen dem Kommunikationsendgerät 301 und dem Server 303 ein Basisprofil BP des Kommunikationsendgeräts 301 oder eine Referenz auf ein Basisprofil BP des Kommunikationsendgeräts 301 mittels einer ersten Nachricht 313 an den Gateway-Rechner 302 übermittelt.

Wenn die Eigenschaften und/oder die Fähigkeiten des Kommunikationsendgeräts 301, die mittels des Basisprofils BP spezifiziert werden, beispielsweise durch eine zusätzlich angeschlossene Hardeware erweitert oder verändert worden sind, wird die erste Nachricht 313 erweitert, indem zusätzlich zu dem Basisprofil BP noch ein erstes Differenzprofil DP1 des Kommunikationsendgeräts 301 oder eine Referenz auf ein erstes Differenzprofil DP1 des Kommunikationsendgeräts 301 an den Gateway-Rechner 302 in Schritt 304 mittels der ersten Nachricht 313 übermittelt wird.

In diesem Beispiel wird angenommen, dass ein erstes Differenzprofil DP1 übermittelt wird.

Das Basisprofil BP und das erste Differenzprofil DP1 können von dem Gateway-Rechner 302 in Schritt 305 zwischengespeichert und ausgewertet werden. Der Gateway-Rechner 302 kann das Basisprofil BP und das erste Differenzprofil DP1 um ein zweites Differenzprofil DP2, das von dem Gateway-Rechner 302 selbst erzeugt wird, ergänzen. Dies geschieht beispielsweise dann, wenn der Gateway-Rechner 302 über besondere Eigenschaften und/oder Fähigkeiten verfügt, die von den mittels des Basisprofils BP und des ersten Differenzprofils DP1 spezifizierten Eigenschaften und Fähigkeiten des Kommunikationsendgeräts 301 abweichen oder diese ergänzen.

In diesem Beispiel wird angenommen, das ein zweites Differenzprofil DP2 erzeugt wird.

Das Basisprofil BP, das erste Differenzprofil DP1 und das zweite Differenzprofil DP2 werden in Schritt 306 mittels einer zweiten Nachricht 314 an den Server 303 übermittelt.

In Schritt 307 erstellt der Server 303 auf Basis des Basisprofils BP, des ersten Differenzprofils DP1 und des zweiten Differenzprofils DP2 eine resultierendes Profil für das Kommunikationsendgerät 301. Falls in Schritt 304 oder in Schritt 306 nur Referenzen auf Profile anstatt der Profile selbst, das heißt des ersten Basisprofils BP oder des ersten Differenzprofils DP1 oder des zweiten Differenzprofils DP2, übertragen wurden, müssen diese gegebenenfalls vor der Verarbeitung im Schritt 305 von dem Gateway-Rechner 302 bzw. vor der Verarbeitung 307 von dem Server 303 dereferenziert werden, das heißt die referenzierten Profile müssen eventuell von anderen Servern, auf denen sie gespeichert sind, heruntergeladen werden.

Das resultierende Profil, das die individuellen Eigenschaften des Kommunikationsendgeräts 301, das in diesem Ausführungsbeispiel WAP-fähig ist, und gegebenenfalls die ergänzenden Fähigkeiten des Gateways 302 und/oder eventuell anderer Netzwerkelemente spezifiziert, stellt das aktuelle Kommunikationsendgerätprofil dar, und wird von dem Server 303 verwaltet.

Während einer bestehenden Kommunikationsverbindung oder einer bestehenden Kommunikationssitzung kann das Herunterladen von Daten durch das Kommunikationsendgerät 301 durch Absenden einer Nachricht zur Datenanforderung eingeleitet werden. In Schritt 308 übermittelt das Kommunikationsendgerät 301 eine solche Daten-Anforderungsnachricht 315 an den Gateway-Rechner 302. In diesem Beispiel wird angenommen, dass sich die Eigenschaften oder die Fähigkeiten des Kommunikationsendgeräts 301 seit Schritt 304 geändert haben. Deshalb wird mittels der Daten-Anforderungsnachricht 315 ein aktualisiertes Basisprofil BP und ein drittes Differenzprofil DP3 an den Gateway-Rechner 302 übertragen. Die anschließend ausgeführten Schritte 310, 311 und 312 werden analog zu den Schritten 305, 306 und 307 durchgeführt.

Haben sich die Eigenschaften und die Fähigkeiten des Kommunikationsendgeräts 301 seit dem Schritt 304 nicht geändert, so werden in Schritt 308 kein aktualisiertes Basisprofil BP und kein drittes Differenzprofil DP3 übertragen und in den dem Schritt 308 nachfolgenden Schritten die in den Schritten 304 bis 307 übermittelten und im Gateway-Rechner 302 bzw. im Server 303 gespeicherten Profile des Kommunikationsendgeräts 301 verwendet, beispielsweise das zuvor bestimmte resultierende Profil. Hat sich das in dem Gateway-Rechner 302 gespeicherte Profil seit dem Schritt 304 ebenfalls nicht verändert, so wird von dem Server 303 das in den Schritten 304 bis 307 übermittelte Profil des Kommunikationsendgeräts 301 verwendet.

Anschaulich wird also bei der mit Bezug auf Fig.3 erläuterten Vorgehensweise ein resultierendes Profil aus einem Basisprofil und beliebig vielen Differenzprofilen generiert, wobei die Datenübertragung zwischen dem Kommunikationsendgerät 301 und dem Gateway-Rechner 302 auch in Form von Referenzen auf das Basisprofil und auf eventuelle Differenzprofile erfolgen kann. Das mittels der Luftschnittstelle zu übertragende Datenvolumen für das aktuelle Kommunikationsendgerätprofil wird ferner dadurch minimiert, dass nur nach der Änderung von Eigenschaften und/oder Fähigkeiten des Kommunikationsendgeräts 301 ein aktualisiertes Basisprofil und/oder Differenzprofil übertragen werden muss.

Gemäß [5] sind die übertragenden Profile, das heißt die Basisprofile und die Differenzprofile, basierend auf der Metasprache XML (Extensible Markup Language), die beispielsweise in [6] beschrieben ist, ausgestaltet.

Auf XML basierende Formate eignen sich gut für den Plattform unabhängigen und Software unabhängigen Austausch strukturierter Daten. Dies gilt insbesondere für den Datentransfer zwischen Programmen und Rechnern unterschiedlicher Hersteller und Systeme.

Mittels eines Kommunikationsendgerätprofils können mehrere Komponenten spezifiziert werden, wobei jede Komponente mehrere Attribute mit den dazugehörigen Werten aufweisen kann. Beispielsweise weist die Komponente Hardware beispielsweise die Attribute Bildschirmgröße (Screen Size) und Farbfähigkeit (Color Capability) und deren Werte auf.

Die bei dem in Fig.3 dargestellten Nachrichtenfluss übertragenen Profile (Basisprofile BP und Differenzprofile DP1, DP2, DP3) und das resultierende Profil sind beispielsweise gemäß Tabelle 1 ausgestaltet, das die prinzipielle Struktur eines Profils, wie es von dem WAP-Forum für den UA-Prof-Standard in [5] definiert wird, zeigt.

**Tabelle 1**

| Komponente_1 |
|---|
| Attribut_1a = Wert_1a |
| Attribut_1b = Wert_1b |

| Komponente_2 |
|---|
| Attribut_2a = Wert_2a |
| Attribut_2b = Wert_2b |
| Attribut_2c = Wert_2c |
| Attribut_2d = Wert_2d |

Informationsblöcke und einzelne Informationen werden innerhalb eines Profils mittels sogenannter Tags (Marken) voneinander abgegrenzt.

Die meisten Tags treten bei auf XML basierenden Dokumenten paarweise als Start-Befehle und End-Befehle auf und geben an, welche Bedeutung der zwischen ihnen eingeschlossene Text hat. Der eingeschlossene Text kann wiederum mittels weiterer Tags unterteilt sein, sodass beispielsweise Listen von Parametern für ein Attribut ermöglicht werden. Die Angaben werden von Attributen in einer gemäß XML ausgestalteten Datei stets durch Quotierungszeichen (< >) eingeschlossen.

Diese Art der Gliederung weist die Vorteile auf, dass alle Komponenten und Attribute flexibel genutzt und erweitert werden können. Ferner ist auf diese Weise die Struktur eines Profils gemäß dem UA-Prof-Standard beliebig erweiterbar und ermöglicht eine einfache anschauliche Darstellung.

Die in Schritt 308 übertragene Daten-Anforderungsnachricht 315 ist beispielsweise die mit Bezug auf Fig.2 beschriebene, in Schritt 215 übertragene MM1_retrieve.REQ-Nachricht.

Diese Nachricht ist auf Ebene des Transportprotokolls beispielsweise mittels des Datenanforderungsbefehls "WSP GET" des bei MMS verwendeten Transportprotokolls WSP (Wireless Session Protocol) oder des Datenanforderungsbefehls "http GET" gemäß dem bei MMS verwendeten Transportprotokoll http (Hypertext Transfer Protocol) realisiert.

In diesem Ausführungsbeispiel enthält der jeweilige Datenanforderungsbefehl entsprechend Schritt 308 ein Basisprofil und ein oder mehrere Differenzprofile.

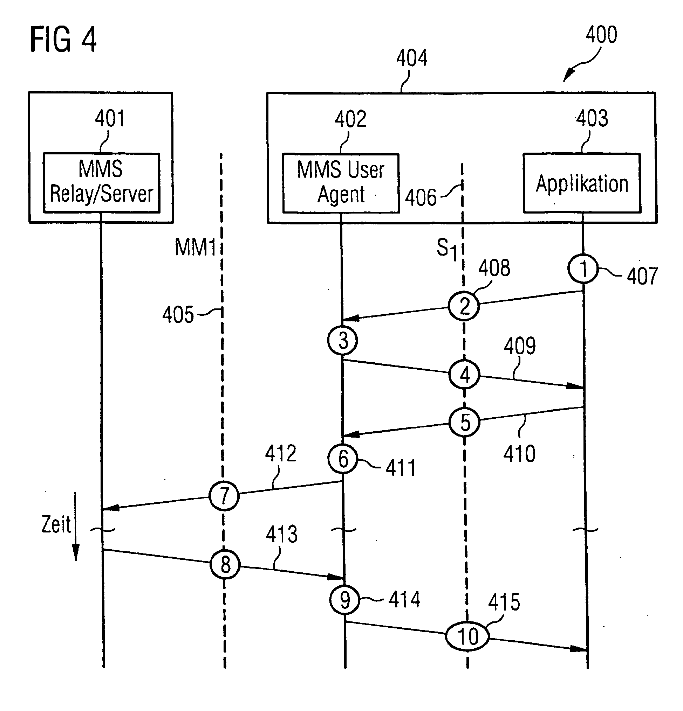

Fig.4 zeigt ein Nachrichtenflussdiagramm 400 gemäß einem Ausführungsbeispiel der Erfindung.

Der in Fig.4 dargestellte Nachrichtenfluss findet zwischen einem MMS-Relay/Server 401, einem MMS-User-Agent 402 und einer Applikation 403 statt.

Der MMS-User-Agent 402 und die Applikation 403 sind auf einem Kommunikationsendgerät 404 installiert. Das Kommunikationsendgerät 404 ist beispielsweise ein Teilnehmergerät eines Mobilfunk-Kommunikationssystems.

Der MMS-Relay/Server ist beispielsweise analog zu dem ersten MMS-Relay/Server 102, der oben mit Bezug auf Fig.1 beschrieben ist, angeordnet und ausgestaltet.

Der MMS-User-Agent 402 ist beispielsweise analog zu dem ersten MMS-User-Agent 101, der oben mit Bezug auf Fig.1 beschrieben ist, angeordnet und ausgestaltet.

Der Nachrichtenfluss wird mittels einer ersten Schnittstelle 405, die analog zu der ersten Schnittstelle 105 (bzw. dritten Schnittstelle 207), die oben mit Bezug auf Fig.1 (bzw. Fig. 2) beschrieben ist, ausgestaltet ist, und einer zweiten Schnittstelle 406, die die Schnittstelle zwischen dem MMS-User-Agent 402 und der Applikation 403 bildet, durchgeführt.

Zur Nutzung von MMS als Transportmedium wird nach einer erfolgreichen Installation einer Applikation auf einem Kommunikationsendgerät, oder allgemein auf einer MMS-Einheit, beispielsweise einem MMS-Relay/Server oder einem VASP-Server, von der MMS-Einheit für die Applikation eine Applikationsidentifikation, die die Applikation identifiziert, und/oder eine Applikationsadresse, mittels welcher die Applikation adressiert werden kann, vergeben oder die Applikation teilt der MMS-Einheit eine Applikationsidentifikation der Applikation und/oder eine Applikationsadresse der Applikation mit.

Wenn möglich werden die Applikationsidentifikation und/oder die Applikationsadresse, die zum Referenzieren der Applikation dienen und insbesondere dazu dienen, Multimedia-Messages unter Angabe der Applikationsidentifikation der Applikation und/oder der Applikationsadresse der Applikation an die Applikation zu senden, eineindeutig gewählt.

In einer Ausführungsform wird gegebenenfalls zwischen der Applikation und der MMS-Einheit eine eindeutige Applikationsidentifikation und/oder Applikationsadresse für die Applikation ausgehandelt.

In einer Ausführungsform beinhaltet die Applikationsidentifikation und/oder Applikationsadresse eine hierarchisch gegliederten URI (Uniform Resource Identifier; Verweis auf einen Speicherplatz), damit bei einer eventuell fehlgeschlagenen automatischen Auflösung der Applikationsidentifikation und/oder Applikationsadresse durch die angesprochene MMS-Einheit immer noch eine zweite manuelle oder automatische Auflösung beispielsweise durch eine andere Applikation gewährleistet ist.

In einer weiteren Ausführungsform unterscheidet sich die Applikationsidentifikation und/oder Applikationsadresse durch mindestens ein bestimmtes Element (vorzugsweise durch das oder die letzte(n) Element(e)) in der hierarchischen Gliederung, so dass durch Auflösung dieses/dieser bestimmten Elemente(s) beispielsweise die Adressierung von unterschiedlichen Instanzen der gleichen Applikation gewährleistet ist.

In dieser Ausführungsform teilt, was bevorzugt ist, die Applikation 403 der MMS-Einheit, das heißt hier dem MMS-User-Agent 402, eine der Applikation 403 bekannte Applikationsidentifikation und/oder Applikationsadresse der Applikation 403 mit, da auf diese Weise Absender, die eine Multimedia-Message, mittels welcher Daten an die Applikation 403 übermittelt werden, an das Kommunikationsendgerät 404 übermitteln, die der Applikation 403 bekannte Applikationsidentifikation und/oder die Applikationsadresse verwenden können und nicht über eine von der MMS-Einheit an die Applikation 403 vergebene oder von der MMS-Einheit und der Applikation 403 ausgehandelte Applikationsidentifikation und/oder Applikationsadresse informiert werden müssen.

In einer anderen Ausführungsform verwaltet die MMS-Einheit, die Zuordnung einer externen Kennung (d.h. eine zweite Applikationsidenfikation und/oder Applikationsadresse), die für die Adressierung einer Applikation auf der ersten Schnittstelle 405 verwendet wird, zu der intern ausgehandelten Applikationsidenfikation und/oder Applikationsadresse, die zur Adressierung auf der zweiten Schnittstelle 406 verwendet wird. Bei dieser Ausführungsform ist jedoch ein gegenüber der oben beschriebenen Ausführungsform erhöhter Aufwand erforderlich.

Es wird angenommen, dass in Schritt 407 die Applikation 403 erfolgreich auf dem Kommunikationsendgerät 404 installiert wurde.

In Schritt 408 gibt die Applikation 403, dem MMS-User-Agent 402 mittels einer entsprechenden Nachricht die ihr zugeordnete Applikationsidentifikation und/oder die ihr zugeordnete Applikationsadresse bekannt.

Die Schritte 409 und 410 werden optional ausgeführt, beispielsweise werden sie je nach Applikation 403 oder Kommunikationsendgerät 404 durchgeführt oder nicht.

In Schritt 409 beantragt der MMS-User-Agent 402 von der Applikation 403 die Übermittlung von Zusatzinformationen, welche die Applikation 403 dem MMS-User-Agent 402 in Schritt 410 übermittelt.

Beispielsweise könnte die Applikation 403 in Schritt 410 (oder bereits in Schritt 408) die Information an den MMS-User-Agent 402 übermitteln, dass bei Empfang einer MM1_notificaton.REQ-Nachricht durch den MMS-User-Agent 402 der MMS-User-Agent 402 den Inhalt der Nachrichtenkopffelder der MM1_notification.REQ-Nachricht, die die Absender-Adresse der MM1_notification.REQ-Nachricht und den Betreff der MM1_notification.REQ-Nachricht spezifizieren, an die Applikation 403 übermitteln soll, oder die Information, dass der MMS-User-Agent 402, wenn er im Rahmen der Applikation 403 eine Multimedia Message mittels einer MM1_{_}submit.REQ-Nachricht versendet, automatisch einen Übermittlungsbericht (Delivery Report) für die MM1_submit.REQ-Nachricht beantragen soll. Allgemein formuliert kann die Applikation der MMS-Einheit, auf der sie installiert ist, mit Hilfe des oben beschriebenen Austausches von Zusatzinformationen in Schritt 410 (oder bereits in Schritt 408) anzeigen, welche Daten sie in welchem Format zu übergeben beabsichtigt (wenn die Applikation das Verschicken einer in [2] definierten 3GPP-Abstract-Message von der MMS-Einheit einleitet) bzw. welche Daten sie in welchem Format zu empfangen beabsichtigt (wenn die Applikation das Daten aus einer in [2] definierten empfangenen 3GPP-Abstract-Message von der MMS-Einheit erhält).

Die von der Applikation 403 an den MMS-User-Agent übermittelten Zusatzinformationen können auch ein Differenzprofil gemäß dem UA-Prof-Standard mit Informationen über die Applikation 403, also anschaulich ein Differenzprofil der Applikation 403, enthalten, das in Schritt 411 an den MMS-Relay/Server 401 übermittelt wird.

Die Übermittlung von Differenzprofilen von Applikationen beseitigt das Problem der unerwünschten Inhaltsanpassung (Inhaltsanpassung (engl.: Content Adaptation)) jedoch nur, wenn alle Applikationen, die mittels MMS Daten übermitteln, Differenzprofile bereit stellen. Die Übermittlung von Differenzprofilen von Applikationen innerhalb der übermittelten Zusatzinformationen ist deshalb nicht bevorzugt.

Die Schritte 411 und 412 werden je nach Ausführungsform unterschiedlich ausgeführt, insbesondere abhängig davon, ob die Schritte 409 und 410 ausgeführt worden.

In einer Ausführungsform setzt der MMS-User-Agent 402 den MMS-Relay/Server 401 in Schritt 412 mittels einer entsprechenden in Schritt 412 erzeugten Nachricht davon in Kenntnis, dass auf dem Kommunikationsendgerät 404 eine neue Applikation 403 installiert worden ist, die MMS als Transportmedium nutzt. Dies kann beispielsweise mittels eines Basisprofils oder mittels eines Differenzprofils, je nach Zeitpunkt der Installation der Applikation 403 auf dem Kommunikationsendgerät 404, durchgeführt werden, wie es oben mit Bezug auf Fig.3 erläutert ist.

In einer Ausführungsform übermittelt der MMS-User-Agent 402 in Schritt 412 die Applikationsidentifikation und/oder die Applikationsadresse der Applikation 403 mittels einer entsprechenden Nachricht an den MMS-Relay/Server 401.

In einer Ausführungsform beantragt der MMS-User-Agent 402 mittels eines gegenüber [3] erweiterten Kommunikationsendgerätprofils gemäß dem UA-Prof-Standard, welches das Profil des MMS-User-Agent 402 an den MMS-Relay/Server 401 übermittelt, das Ausschalten der Konvertierung von Dateien mit einem bestimmten Dateityp und/oder einem bestimmten Dateiformat im MMS-Relay/Server 401 im Rahmen der Inhaltsanpassung gemäß MMS temporär oder dauerhaft. In einer alternativen Ausgestaltung der Erfindung ist eine Erweiterung dieser Steuerinformation für die Übermittelung bestimmter Randbedingungen von MMS-User-Agent an den MMS-Relay/Server vorgesehen.

Wurden die Schritte 409 und 410 durchgeführt und enthalten die übermittelten Zusatzinformationen ein Differenzprofil der Applikation 403, so wird dieses Differenzprofil im Schritt 411 ausgewertet und/oder in Schritt 412 von dem MMS-User-Agent 402 an den MMS-Relay/Server 401 übermittelt.

Wie oben erwähnt, ermöglicht diese Vorgehensweise nur dann eine zuverlässige Lösung des Problems der unerwünschten Inhaltsanpassung, wenn alle Applikationen die Übermittlung von Informationen mittels eines Differenzprofils gemäß dem UA-Prof-Standard zuverlässig unterstützen.

Da dies in der Praxis eventuell nicht gewährleistet werden kann, ist die folgende Ausführungsform bevorzugt, bei der die Übermittlung eines Differenzprofils von der Applikation 403 an den MMS-User-Agent 402 nicht erforderlich ist.

Der MMS-User-Agent 402 fügt in Schritt 411 ein erstes Informationselement in ein Kommunikationsendgerätprofil, beispielsweise in ein Differenzprofil gemäß dem UA-Prof-Standard oder in ein Basisprofil des Kommunikationsendgeräts 404 gemäß dem UA-Prof-Standard ein, welches Informationselement dem MMS-Relay/Server 401 anzeigt, dass er (dauerhaft oder temporär) keine Konvertierung von an den zum MMS-User-Agent 402 zu übermittelnden Dateien eines bestimmten Dateityps und/oder eines bestimmten Dateiformats durchführen soll. Auch die Übermittelung von zusätzlichen Randbedingungen (beispielsweise in Form weiterer Informationselemente) von dem MMS-User-Agent 402 an den MMS-Relay/Server 401 zum Beeinflussen der Konvertierung ist in einer alternativen Ausgestaltung der Erfindung vorgesehen.

Beispiele für ein Kommunikationsendgerätprofil gemäß dem UA-Prof-Standard, in das ein Informationselement eingefügt worden ist, werden unten mit Bezug auf die Tabellen 2 bis 4 erläutert.

Das erste Informationselement kann weitere ergänzende Bedingungen und/oder Einschränkungen aufweisen, beispielsweise die Information, dass von dem Zeitpunkt der Übermittlung des ersten Informationselements an den MMS Relay/Server 401 die Unterdrückung der Konvertierung von Dateien, die an den MMS-User-Agent 402 übermittelt werden, mit einem bestimmten Dateityp und/oder einem bestimmten Dateiformat generell nicht durchgeführt werden soll, oder die Information, dass die Konvertierung von Dateien mit einem bestimmten Dateityp und/oder einem bestimmten Dateiformat, die an den MMS-User-Agent 402 übermittelt werden, nur in den Fällen nicht durchgeführt werden soll, wenn die Dateien im Rahmen der Nutzung von MMS als Transportmedium für die Applikation 403 verwendet wird, oder die Information, dass die Konvertierung von Dateien mit einem bestimmten Dateityp und/oder einem Dateiformat, die an den MMS-User-Agent 402 gesendet werden, nur dann nicht durchgeführt werden soll, wenn die Multimedia-Messages, die die Dateien enthalten, von einem bestimmten, angegebenen Absender an den MMS-User-Agent 402 übermittelt werden.

In einem anderen Ausführungsbeispiel, bei dem die Applikation 403 auf dem Kommunikationsendgerät 404 deinstalliert worden ist, beispielsweise in Schritt 407, und sich die Applikation 403 von dem MMS-User-Agent 402 abgemeldet hat, fügt der MMS-User-Agent 402 in Schritt 411 ein zweites Informationselement in ein Differenzprofil gemäß dem UA-Prof-Standard ein, das nach Übermittlung des Differenzprofils an den MMS-Relay/Server 401 dem MMS-Relay/Server 401 anzeigt, dass eine Konvertierung von Dateien eines bestimmten Dateityps und/oder Dateiformats, die an den MMS-User-Agent 402 übermittelt werden, ab dem Zeitpunkt der Übermittlung des zweiten Informationselements wieder durchgeführt werden soll.

Nachdem in Schritt 411 ein entsprechendes Kommunikationsendgerätprofil, beispielsweise ein Differenzprofil gemäß dem UA-Prof-Standard durch Einfügen eines ersten Informationselements oder unter Verwendung der in Schritt 410 an den MMS-User-Agent 402 übermittelten Zusatzinformationen, erzeugt worden ist, wird das Kommunikationsendgerätprofil von dem Kommunikationsendgerät an den MMS-Relay/Server 401 in Schritt 412 übermittelt.

In einer Ausführungsform, in der die Applikation 403 deinstalliert worden ist, wird nicht ein zweites Informationselement in ein Differenzprofil eingefügt und übermittelt, sondern das oben beschriebene erste Informationselement wird erneut mittels eines Differenzprofils übermittelt, in welchem ersten Informationselement jedoch der in einem Nachrichtkopffeld enthaltene Wert derart abgeändert ist, dass dem MMS-Relay/Server 401 nach Übermittlung des ersten Informationselements angezeigt wird, dass eine Konvertierung von Dateien mit einem bestimmten Dateityp und/oder Dateiformat, die an den MMS-User-Agent 402 übermittelt werden, ab dem Zeitpunkt der Übermittlung (wieder) durchgeführt werden soll.

Durch die Übermittlung des Kommunikationsendgerätprofils in Schritt 412 ist somit dem MMS-Relay/Server 401 bekannt, wie er an das Kommunikationsendgerät 404 übertragene Multimedia-Messages, insbesondere für den Fall, dass MMS als Transportmedium für Applikationen verwendet wird, behandeln soll.

In Schritt 413 wird beispielsweise eine Multimedia-Message von dem MMS-Relay/Server 401 an den MMS-User-Agent 402 übertragen.

Wurden die Schritte 409 und 410 durchgeführt, und wurden dem MMS-User-Agent 402 dabei Zusatzinformationen bereit gestellt, die Spezifizieren, dass der MMS-User-Agent 402 empfangene Multimedia-Messages auf eine angegebene Weise behandeln soll, so führt der MMS-User-Agent 402 dies in Schritt 414 durch.

In Schritt 415 übermittelt der MMS-User-Agent 402 die für die Applikation 403 in der empfangenen Multimedia-Message enthaltenen Daten an die Applikation 403. Dies kann beispielsweise der Inhalt einzelner Nachrichtenkopffelder der Multimedia-Message oder die gesamte Multimedia-Message sein.

In einer Ausführungsform sind die in Schritt 415 übermittelten Daten abhängig von den in den Schritten 408 und/oder 410 ausgetauschten Zusatzinformationen.

Im folgenden werden Beispiele für Kommunikationsendgerätprofile gemäß dem UA-Prof-Standard, in die Informationselemente eingefügt sind, wie es beispielsweise in Schritt 411 durchgeführt wird, mit Bezug auf Tabelle 2, Tabelle 3, Tabelle 4 und Tabelle 5 erläutert.

**Tabelle 2**

| Attribut | Beschreibung | Auflösungs regel | Typ | Beispielwert |
|---|---|---|---|---|
| Komponente: MmsCharacteristics | | | | |
| MmsMax Message Size | maximale Größe der Multimedia-Message in Bytes | geschlossen | Zahl | 20480 |
| MmsMax ImageResol ution | maximale Größe eines Bildes in Einheiten von Pixeln (horizontal x vertikal) | geschlossen | Literal | "80x60" |
| MmsCcpp Accept | Liste unterstützter Inhalts-Typen, übermittelt als MIME-Typen | geschlossen | Literal-Liste | "image/ jpeg", "audio/ wav", "video/ mpeg-4" |
| MmsCcpp Accept CharSet | Liste von Zeichensätzen, die der MMS-Client unterstützt. Jedes Element der Liste ist der Name eines Zeichensatzes, der bei der IANA (Internet Assigned Numbers Authority) registriert ist | geschlossen | Literal-Liste | "US-ASCII", "ISO-8859-1" |
| MmsCcpp AcceptLang uage | Liste bevorzugter Sprachen. Das erste Element in der Liste sollte als erste Wahl des Benutzers angesehen werden. Der Wert ist eine Liste natürlicher Sprachen, wobei jedes Element der Liste der Name einer Sprache ist, wie in [8] definiert. | geschlossen | Li-teral-Liste | "en", "fr" |
| MmsCcpp AcceptEnco ding | Liste von Transfercodierungen, die der MMS-Client unterstützt. Der Wert ist eine Liste von Transfercodierungen, wobei jedes Element in der Liste ein Transfercodierungsname ist, wie in [4] spezifiziert, der bei der IANA registriert ist | geschlossen | Literal-Liste | "base64", "quoted-printable " |
| MmsVersion | Von dem MMS-Client unterstützten MMS-Versionen übermittelt als majorVersionNumber.minorV ersionNumber | geschlossen | Literal-Liste | "2.0", "1.3" |
| MmsCcpp StreamingC apable | Zeigt an, ob der MMS-Client Streaming-fähig ist | geschlossen | booles ch | "Yes", "No" |
| MmsSmilBaseSet | Zeigt eine oder mehrere Basismengen von SMIL(Synchronized Multimedia Integration Language)-Modulen an, die der Client unterstützt. "SMIL-CONF-1-2" identifiziert die SMIL-Basismenge und zugehörige Beschränkungen, wie in [3] definiert. Vordefinierte Werte für Basismengen, wie in [9] definiert, können auch verwendet werden (z.B. "SMIL-3GPP-R4" und "SMIL-3GPP-R5"). | geschlossen | Literal-Liste | "SMIL-CONF-1-2" |
| MmsContent Class | Liste unterstützter MM-Content-Klassen TX = Text IB = Image Basic IR = Image Rich VB = Video Basis VR = Video Rich | geschlossen | Literal-Liste | "TX","IB" , "IR","VB" "VR" |
| **MmsBearer ForApplic** | **Zeigt an, ob Applikation/en MMS- als Träger verwendet/n** | **geschlossen** | **booles ch** | **"Yes", "No"** |
| Mms Suppress Content Adaptation | Anforderung, dass MMS-Proxy-Relay keine Content-Adaptation durchführt | geschlossen | booles ch | "Yes", "No" |

Die Tabellen 2 bis 5 zeigen jeweils eine mögliche Ausgestaltung eines erweiterten gegenüber [7] erweiterten Kommunikationsendgerätprofils.

Ein Kommunikationsendgerätprofil, das gemäß Tabelle 2 ausgestaltet ist, enthält ein gegenüber [7] neues XML-Attribut mit der Bezeichnung MmsBearerForApplic, das, wenn das Kommunikationsendgerätprofil von einem Kommunikationsendgerät an einen MMS-Relay/Server übermittelt wird, zur Übermittlung der Information dient, dass mindestens eine Applikation auf dem Kommunikationsendgerät installiert worden ist, die MMS als Transportmedium verwendet.

In einer anderen Ausführungsform wird das XML-Attribut zum Einschalten und Ausschalten der Inhaltsanpassung (engl.: Content Adaptation) im MMS-Relay/Server verwendet.

**Tabelle 3**

| Attribut | Beschreibung | Auflösungs regel | Typ | Beispielwert |
|---|---|---|---|---|
| Komponente: MmsCharacteristics | | | | |
| MmsMax Message Size | maximale Größe der Multimedia-Message in Bytes | geschlossen | Zahl | 20480 |
| MmsMax ImageResol ution | maximale Größe eines Bildes in Einheiten von Pixeln (horizontal x vertikal) | geschlossen | Literal | "80x60" |
| MmsCcpp Accept | Liste unterstützter Inhalts-Typen, übermittelt als MIME-Typen | geschlossen | Literal-Liste | "image/ jpeg", "audio/ wav", "video/ mpeg-4" |
| **MmsCcpp Accept Applic** | **Liste von Content-Types, die von der Applikation unterstützt werden, die MMS- als Träger verwendet** | **geschlossen** | **Literal-Liste** | **"image/ new01", "audio/ new02", "unknown/ new03"** |
| MmsCcpp Accept CharSet | Liste von Zeichensätzen, die der MMS-Client unterstützt. Jedes Element der Liste ist der Name eines Zeichensatzes, der bei der IANA (Internet Assigned Numbers Authority) registriert ist | geschlossen | Literal-Liste | "US-ASCII", "ISO-8859-1" |
| MmsCcpp AcceptLang uage | Liste bevorzugter Sprachen. Das erste Element in der Liste sollte als erste Wahl des Benutzers angesehen werden. Der Wert ist eine Liste natürlicher Sprachen, wobei jedes Element der Liste der Name einer Sprache ist, wie in [8] definiert. | geschlossen | Literal-Liste | "en", "fr" |
| MmsCcpp AcceptEnco ding | Liste von Transfercodierungen, die der MMS-Client unterstützt. Der Wert ist eine Liste von Transfercodierungen, wobei jedes Element in der Liste ein Transfercodierungsname ist, wie in [4] spezifiziert, der bei der IANA registriert ist | geschlossen | Literal-Liste | "base64", "quoted-printable " |
| MmsVersion | Von dem MMS-Client unterstützten MMS-Versionen übermittelt als majorVersionNumber.minorV ersionNumber | geschlossen | Literal-Liste | "2.0", "1.3" |
| MmsCcpp StreamingC apable | Zeigt an, ob der MMS-Client Streaming-fähig ist | geschlossen | booles ch | "Yes", "No" |
| MmsSmilBas eSet | Zeigt eine oder mehrere Basismengen von SMIL(Synchronized Multimedia Integration Language)-Modulen an, die der Client unterstützt. "SMIL-CONF-1-2" identifiziert die SMIL-Basismenge und zugehörige Beschränkungen, wie in [3] definiert. Vordefinierte Werte für Basismengen, wie in [9] definiert, können auch verwendet werden (z.B. "SMIL-3GPP-R4" und "SMIL-3GPP-R5"). | geschlossen | Literal-Liste | "SMIL-CONF-1-2" |
| MmsContent Class | Liste unterstützter MM-Content-Klassen TX = Text IB = Image Basic IR = Image Rich VB = Video Basis VR = Video Rich | geschlossen | Literal-Liste | "TX","IB" , "IR","VB" ' "VB" |
| Mms Suppress Content Adaptation | Anforderung, dass MMS-Proxy-Relay keine Content-Adaptation durchführt | geschlossen | booles ch | "Yes" . "No" |

In einer anderen Ausführungsform wird ein Kommunikationsendgerätprofil verwendet, das gemäß Tabelle 3 ausgestaltet ist. Dieses Kommunikationsendgerätprofil weist ein gegenüber [7] neues XML-Attribut mit der Bezeichnung MmsCcppAcceptApplic auf, das zur Übermittlung der Information von einem Kommunikationsendgerät an einen MMS-Relay/Server dient, welche MIME-content-types von einer auf dem Kommunikationsendgerät installierten Applikation unterstützt werden.

**Tabelle 4**

| Attribut | Beschreibung | Auflösungs regel | Typ | Beispielwert |
|---|---|---|---|---|
| Komponente: MmsCharacteristics | | | | |
| MmsMax Message Size | maximale Größe der Multimedia-Message in Bytes | geschlossen | Zahl | 20480 |
| MmsMax ImageResol ution | maximale Größe eines Bildes in Einheiten von Pixeln (horizontal x vertikal) | geschlossen | Literal | "80x60" |
| MmsCcpp Accept | Liste unterstützter Inhalts-Typen, übermittelt als MIME-Typen | geschlossen | Literal-Liste | "image/ jpeg", "audio/ wav", "video/mpeg-4" |
| MmsCcpp Accept CharSet | Liste von Zeichensätzen, die der MMS-Client unterstützt. Jedes Element der Liste ist der Name eines Zeichensatzes, der bei der IANA (Internet Assigned Numbers Authority) registriert ist | geschlossen | Literal-Liste | "US-ASCII", "ISO-8859-1" |
| MmsCcpp AcceptLang uage | Liste bevorzugter Sprachen. Das erste Element in der Liste sollte als erste Wahl des Benutzers angesehen werden. Der Wert ist eine Liste natürlicher Sprachen, wobei jedes Element der Liste der Name einer Sprache ist, wie in [8] definiert. | geschlossen | Literal-Liste | "en", "fr" |
| MmsCcpp AcceptEnco ding | Liste von Transfercodierungen, die der MMS-Client unterstützt. Der Wert ist eine Liste von Transfercodierungen, wobei jedes Element in der Liste ein Transfercodierungsname ist, wie in [4] spezifiziert, der bei der IANA registriert ist | geschlossen | Literal-Liste | "base64", "quoted-printable 11 |
| MmsVersion | Von dem MMS-Client unterstützten MMS-Versionen übermittelt als majorVersionNumber.minorV ersionNumber | geschlossen | Literal-Liste | "2.0", "1.3" |
| MmsCcpp StreamingC apable | Zeigt an, ob der MMS-Client Streaming-fähig ist | geschlossen | booles ch | "Yes", "No" |
| MmsSmilBas eSet | Zeigt eine oder mehrere Basismengen von SMIL(Synchronized Multimedia Integration Language)-Modulen an, die der Client unterstützt. "SMIL-CONF-1-2" identifiziert die SMIL-Basismenge und zugehörige Beschränkungen, wie in [3] definiert. Vordefinierte Werte für Basismengen, wie in [9] definiert, können auch verwendet werden (z.B. "SMIL-3GPP-R4" und "SMIL-3GPP-R5"). | geschlossen | Literal-Liste | "SMIL-CONF-1-2" |
| MmsContent Class | Liste unterstützter MM-Content-Klassen TX = Text IB = Image Basic IR = Image Rich VB = Video Basis VR = Video Rich | geschlossen | Literal-Liste | "TX","IB" , "IR","VB" "VR" |
| Mms Suppress Content Adaptation | Anforderung, dass MMS-Proxy-Relay keine Content-Adaptation durchführt | geschlossen | booles ch | "Yes", "No" |
| **Mms Suppress Content Adaptation Applic** | **Anforderung, dass MMS-Prox-Relay keine Inhaltsanpassung (engl.: Content Adaptation) durchführt, wenn MMS- als Träger verwendet wird** | **geschlossen** | **booles ch** | **"Yes", "No"** |

In einer anderen Ausführungsform ist ein von einem Kommunikationsendgerät an einen MMS-Relay/Server übermitteltes Kommunikationsendgerätprofil gemäß Tabelle 4 ausgestaltet. Das Kommunikationsendgerätprofil weist in diesem Fall ein gegenüber in [7] neues XML-Attribut mit der Bezeichnung MmsSuppressContentAdaptationApplic auf, mittels welchem der MMS-Relay/Server darüber informiert werden kann, dass eine Inhaltsanpassung (engl.: Content Adaptation) im MMS-Relay/Server nicht durchgeführt werden soll, wenn MMS-Multimedia-Messages von einer auf dem Kommunikationsendgerät installierten Applikation zur Übermittlung von Applikations-Daten verwendet werden.

**Tabelle 5**

| Attribut | Beschreibung | Auflösungs regel 1 | Typ | Beispielwert |
|---|---|---|---|---|
| Komponente: MmsCharacteristics | | | | |
| MmsMax Message Size | maximale Größe der Multimedia-Message in Bytes | geschlossen | Zahl | 20480 |
| MmsMax ImageResol ution | maximale Größe eines Bildes in Einheiten von Pixeln (horizontal x vertikal) | geschlossen | Literal | "80x60" |
| MmsCcpp Accept | Liste unterstützter Inhalts-Typen, übermittelt als MIME-Typen | geschlossen | Literal-Liste | "image/jpeg", "audio/ wav", "video/ mpeg-4" |
| MmsCcpp Accept CharSet | Liste von Zeichensätzen, die der MMS-Client unterstützt. Jedes Element der Liste ist der Name eines Zeichensatzes, der bei der IANA (Internet Assigned Numbers Authority) registriert ist | geschlossen | Literal-Liste | "US-ASCII", "ISO-8859-1" |
| MmsCcpp AcceptLang uage | Liste bevorzugter Sprachen. Das erste Element in der Liste sollte als erste Wahl des Benutzers angesehen werden. Der Wert ist eine Liste natürlicher Sprachen, wobei jedes Element der Liste der Name einer Sprache ist, wie in [8] definiert. | geschlossen | Literal-Liste | "en", "fr" |
| MmsCcpp AcceptEnco ding | Liste von Transfercodierungen, die der MMS-Client unterstützt. Der Wert ist eine Liste von Transfercodierungen, wobei jedes Element in der Liste ein Transfercodierungsname ist, wie in [4] spezifiziert, der bei der IANA registriert ist | geschlossen | Literal-Liste | "base64", "quoted-printable " |
| MmsVersion | Von dem MMS-Client unterstützten MMS-Versionen übermittelt als majorVersionNumber.minorV ersionNumber | geschlossen | Literal-Liste | "2.0", "1.3" |
| MmsCcpp StreamingC apable | Zeigt an, ob der MMS-Client Streaming-fähig ist | geschlossen | booles ch | "Yes", "No" |
| MmsSmilBas eSet | Zeigt eine oder mehrere Basismengen von SMIL(Synchronized Multimedia Integration Language)-Modulen an, die der Client unterstützt. "SMIL-CONF-1-2" identifiziert die SMIL-Basismenge und zugehörige Beschränkungen, wie in [3] definiert. Vordefinierte Werte für Basismengen, wie in [9] definiert, können auch verwendet werden (z.B. "SMIL-3GPP-R4" und "SMIL-3GPP-R5"). | geschlossen | Literal-Liste | "SMIL-CONF-1-2" |
| MmsContent Class | Liste unterstützter MM-Content-Klassen TX = Text IB = Image Basic IR = Image Rich VB = Video Basis VR = Video Rich | geschlossen | Literal-Liste | "TX","IB" , "IR","VB" , "VR" |
| Mms Suppress Content Adaptation | Anforderung, dass MMS-Proxy-Relay keine Content-Adaptation durchführt | geschlossen | booles ch | "Yes", "No" |
| **Mms Supported Applics** | **Liste von Apllikationen auf dem Endgerät, die MMS-als Transportmedium nutzen können bzw. wollen.** | **geschlossen** | Literal-Liste | "GameXY", "Börsenku rse", "Beispiel Anwendung " |

In einer anderen Ausführungsform ist ein von einem Kommunikationsendgerät an einen MMS-Relay/Server übermitteltes Kommunikationsendgerätprofil gemäß Tabelle 5 ausgestaltet. Das Kommunikationsendgerätprofil weist in diesem Fall ein gegenüber in [7] neues XML-Attribut mit der Bezeichnung MmsSupportedApplics auf, mittels dessen Hilfe dem MMS-Relay/Server eine Liste von Applikationen (Applikationskennung) angezeigt werden kann, die auf dem Kommunikationsendgerät installiert sind und MMS als Transportmedium (aktuell) nutzen (oder prinzipiell nutzen könnten, d.h. möglicherweise zu nutzen beabsichtigen). Mit dieser Information kann der MMS-Relay/Server gegebenenfalls eine Inhaltsanpassung (engl.: Content Adaptation) unterdrücken, falls er eine Multimedia-Message (MM) zustellen soll, bei der die Applikationsidentifikation und/oder Applikationsadresse mit der vom Endgerät gemäß Tabelle 5 signalisierten Applikationskennung übereinstimmt.

Die Tabellen 2 bis 5 zeigen eine textuelle Kodierung von Attributen gemäß dem UA-Prof-Standard. Gemäß [5] ist auch eine binäre Darstellungsweise möglich, bei der allen textuellen Attributen binäre Token zugeordnet sind. In einer anderen Ausführungsform wird ein auf solche Weise binär kodiertes Kommunikationsendgerätprofil gemäß dem UA-Prof-Standard verwendet.

In diesem Dokument sind folgende Veröffentlichungen zitiert:
[1] 3GPP TS 22.140 version 6.5.0, Release 6; Third Generation Partnership Project; Technical Specification Group Services and System Aspects; Multimedia Messaging Service (MMS); Service Aspects (Stage 1)
[2] 3GPP TS 23.140 version 6.5.0, Release 6; Third Generation Partnership Project; Technical Specification Group Terminals; Multimedia Messaging Service (MMS); Functional Description (Stage 2)
[3] OMA-MMS-CONF-v1_2-20030929-C; Open Mobile Alliance; MMS Conformance Document 1.2; Candidate Version 16-September-2003;
[4] RFC2045; Multipurpose Internet Mail Extensions (MIME), Part One: "Format of Internet Message Bodies"; November 1996; (http://www.ietf.org/rfc/rfc2045.txt)
[5] OMA-WAP-UAProf-v1_1-20021212-C; Open Mobile Alliance; User Agent Profile 1.1; Candidate Version 12-12-2002; (http://member.openmobilealliance.org)
[6] Extensible Markup Language (XML) 1.1; W3C Recommendation, 4th February 2004, François Yergeau, John Cowan, Tim Bray, Jean Paoli, et.al.; (http://www.w3.org/XML)
[7] OMA-MMS-CTR-v1_2-20030916-C; Open Mobile Alliance; MMS Client Transactions 1.2; Candidate Version 16-September-2003; (http://member.openmobilealliance.org)
[8] RFC1766; Tags for the Identification of Languages; March 1995; (http://www.ietf.org/rfc/rfc1766.txt)
[9] 3GPP TS 26.234 version 5.4.0, Release 5, Third Generation Partnership Project; Transparent end-to-end Packet Switched Streaming Service (PSS); Protocols and Codecs
[10] US 2001/0047517 A1
[11] US 2003/177269 A1
[12] EP 1 091 601 A2
[13] EP 1 263 205 A1
[14] US 2003/0177269
[15] Nokia: "Compatibility in using MMS to transport application data" T2-040189
[16] 3GPP TS 23.228 V6.6.0, IP Multimedia Subsystem (IMS) stage 2"
[17] Eichholz, Jan: "LS on Application ID in MMS" T2-030389
[18] Reynolds, F., et al.: "Composite Capability/preference Profiles (CC/PP) : A user side framework for content negotiation"

### Bezugszeichenliste

- 100: Kommunikationssystem
- 101: MMS-User-Agent
- 102,103: MMS-Relay/Server
- 104: MMS-User-Agent
- 105-107: Schnittstellen
- 108,109: Zuständigkeitsbereiche
- 110: Schnittstelle
- 111: Server
- 112: Schnittstelle
- 113: HLR
- 114: Schnittstelle
- 115: MMS-Benutzerdatenbank
- 116: Schnittstelle
- 117: Mehrwertdienst-Server
- 118: Schnittstelle
- 119: Abrechnungssystem
- 120: Schnittstelle
- 121: Relay-Element
- 122: Server-Element
- 200: Nachrichtenflussdiagramm
- 201: MMS-User-Agent
- 202,203: MMS-Relay/Server
- 204: MMS-User-Agent
- 205-207: Schnittstellen
- 208: Multimedia-Message
- 209-217: Verarbeitungsschritte
- 300: Nachrichtenflussdiagramm
- 301: Kommunikationsendgerät
- 302: Gateway-Rechner
- 303: Server
- 304-308: Verarbeitungsschritte
- 310-312: Verarbeitungsschritte
- 313-315: Nachrichten
- 400: Nachrichtenflussdiagramm
- 401: MMS-Relay/Server
- 402: MMS-User-Agent
- 403: Applikation
- 404: Kommunikationsendgerät
- 405,406: Schnittstellen
- 407-415: Verarbeitungsschritte

## Patentansprüche

1. Kommunikationssystem (100) mit einem Kommunikationsendgerät (404) und einem Server (102, 401), wobei
- das Kommunikationsendgerät (404) eine Signalisierungseinrichtung aufweist, die eingerichtet ist, ein Informationselement an den Server (102, 401) zu übermitteln, das spezifiziert, ob mindestens eine auf dem Kommunikationsendgerät (404) installierte Applikation (403) MMS als Transportmedium zur Übertragung von Daten verwendet;
- der Server (102, 401) eine Steuereinrichtung aufweist, die eingerichtet ist, in Abhängigkeit des übertragenen Informationselements eine Steueraktion durchzuführen,
**dadurch** charakterisiert, dass das Informationselement ein boolesches Informationselement ist.

2. Kommunikationssystem (100) gemäß Anspruch 1, wobei der Server (102, 401) eine Übertragungsvorrichtung aufweist, die eingerichtet ist, Nachrichten an das Kommunikationsendgerät (404) zu übertragen, und eine Konvertierungseinrichtung aufweist, die eingerichtet ist, an das Kommunikationsendgerät (404) zu übertragende Nachrichten zu konvertieren, und die Steueraktion das Aktivieren oder das Deaktivieren einer Konvertierung durch die Konvertierungseinrichtung von mittels der Übertragungsvorrichtung des Servers (102, 401) an das Kommunikationsendgerät (404) zu übertragenden Nachrichten ist.

3. Kommunikationssystem (100) gemäß Anspruch 2, wobei die Steueraktion ferner das Bestimmen aufweist, welche mittels der Übertragungsvorrichtung des Servers (102, 401) an das Kommunikationsendgerät (404) zu übertragende Nachrichten von der Konvertierungseinrichtung zu konvertieren sind.

4. Kommunikationsendgerät (404) gemäß Anspruch 2 oder 3, wobei die Konvertierungseinrichtung eingerichtet ist, Nachrichten zu konvertieren, die gemäß einem Multimedia-Übertragungsprotokoll mittels der Übertragungsvorrichtung an das Kommunikationsendgerät (404) zu übertragen sind.

5. Kommunikationssystem (100) gemäß einem der Ansprüche 1 bis 4, wobei die Signalisierungseinrichtung eingerichtet ist, das Informationselement gemäß einem Multimedia-Übertragungsprotokoll an den Server (102, 401) zu übertragen.

6. Kommunikationssystem (100) gemäß Anspruch 4 oder 5, wobei das Multimedia-Übertragungsprotokoll das Übertragungsprotokoll des MMS ist.

7. Kommunikationssystem (100) gemäß einem der Ansprüche 1 bis 6, wobei die Signalisierungseinrichtung eingerichtet ist, das Informationselement mittels eines Profils des Kommunikationsendgeräts (404) zu übertragen.

8. Kommunikationssystem (100) gemäß Anspruch 7, wobei das Profil gemäß dem UA-Prof-Standard ausgestaltet ist.

9. Verfahren zum Steuern eines Kommunikationssystems (100), welches Kommunikationssystem (100) ein Kommunikationsendgerät (404) und einen Server (102, 401) aufweist, wobei gemäß dem Verfahren
- das Kommunikationsendgerät (404) ein Informationselement, das spezifiziert, ob mindestens eine auf dem Kommunikationsendgerät (404) installierte Applikation (403) MMS als Transportmedium zur Übertragung von Daten verwendet, an den Server (102, 401) übermittelt;
- der Server (102, 401) in Abhängigkeit des übertragenen Informationselements eine Steueraktion durchführt,
**dadurch** charakterisiert, dass das Informationselement ein boolesches Informationselement ist.

10. Server (102, 401) eines Kommunikationssystems (100), das ein Kommunikationsendgerät (404) aufweist, wobei der Server (102, 401) eine Steuereinrichtung aufweist, die eingerichtet ist, in Abhängigkeit eines mittels des Kommunikationsendgeräts (404) übermittelten Informationselements, das spezifiziert, ob mindestens eine auf dem Kommunikationsendgerät (404) installierte Applikation (403) MMS als Transportmedium zur Übertragung von Daten verwendet, eine Steueraktion durchzuführen,
**dadurch** charakterisiert, dass das Informationselement ein boolesches Informationselement ist.

11. Verfahren zum Betreiben eines Servers (102, 401) eines Kommunikationssystems (100), welches Kommunikationssystem (100) ein Kommunikationsendgerät (404) aufweist, wobei gemäß dem Verfahren der Server (102, 401) in Abhängigkeit eines mittels des Kommunikationsendgeräts (404) übermittelten Informationselements, das spezifiziert, ob mindestens eine auf dem Kommunikationsendgerät (404) installierte Applikation (403) MMS als Transportmedium zur Übertragung von Daten verwendet, eine Steueraktion durchführt,
**dadurch** charakterisiert, dass das Informationselement ein boolesches Informationselement ist.

12. Kommunikationsendgerät (404) eines Kommunikationssystems (100), welches Kommunikationssystem (100) einen Server (102, 401) aufweist, wobei
das Kommunikationsendgerät (404) eine Signalisierungseinrichtung aufweist, die eingerichtet ist, ein Informationselement, das spezifiziert, ob mindestens eine auf dem Kommunikationsendgerät (404) installierte Applikation (403) MMS als Transportmedium zur Übertragung von Daten verwendet, an den Server (102, 401) zu übermitteln, **dadurch** charakterisiert, dass das Informationselement ein boolesches Informationselement ist.

13. Verfahren zum Betreiben eines Kommunikationsendgeräts (404) eines Kommunikationssystems (100), welches Kommunikationssystem (100) einen Server (102, 401) aufweist, wobei gemäß dem Verfahren das Kommunikationsendgerät (404) ein Informationselement, das spezifiziert, ob mindestens eine auf dem Kommunikationsendgerät (404) installierte Applikation (403) MMS als Transportmedium zur Übertragung von Daten verwendet, an den Server (102, 401) übermittelt,
**dadurch** charakterisiert, dass das Informationselement ein boolesches Informationselement ist.

## Claims

1. A communication system (100) having a communication terminal (404) and a server (102, 401), wherein
- the communication terminal (404) has a signaling device which is configured to transmit an information element to the server (102, 401), which specifies whether at least one application (403) installed on the communication terminal (404) uses MMS as a transport medium for transmission of data;
- the server (102, 401) has a control device which is configured to carry out a control action as a function of the transmitted information element,
**characterized in that** the information element is a Boolean information element.

2. The communication system (100) as claimed in claim 1, wherein the server (102, 401) has a transmission apparatus which is configured to transmit messages to the communication terminal (404), and has a conversion device which is configured to convert messages to be transmitted to the communication terminal (404), and the control action is the activation or the deactivation of a conversion by the conversion device of messages to be transmitted by means of the transmission apparatus of the server (102, 401) to the communication terminal (404).

3. The communication system (100) as claimed in claim 2, wherein the control action furthermore includes the determination of which messages to be transmitted by means of a transmission apparatus of the server (102, 401) to the communication terminal (404) must be converted by the conversion device.

4. The communication terminal (404) as claimed in claim 2 or 3, wherein the conversion device is configured to convert messages which are to be transmitted to the communication terminal (404) by means of the transmission apparatus using a multimedia transmission protocol.

5. The communication system (100) as claimed in one of claims 1 to 4, wherein the signaling device is configured to transmit the information element to the server (102, 401) using a multimedia transmission protocol.

6. The communication system (100) as claimed in claim 4 or 5, wherein the multimedia transmission protocol is the transmission protocol for the MMS.

7. The communication system (100) as claimed in one of claims 1 to 6, wherein the signaling device is configured to transmit the information element by means of a profile of the communication terminal (404).

8. The communication system (100) as claimed in claim 7, wherein the profile complies with the UA-Prof Standard.

9. A method for control of a communication system (100), which communication system (100) has a communication terminal (404) and a server (102, 401), wherein, according to the method:
- the communication terminal (404) transmits an information element, which specifies whether at least one application (403) installed on the communication terminal (404) uses MMS as a transport medium for transmission of data, to the server (102, 401);
- the server (102, 401) carries out a control action as a function of the transmitted information element,
**characterized in that** the information element is a Boolean information element.

10. A server (102, 401) for a communication system (100), which has a communication terminal (404), wherein the server (102, 401) has a control device which is configured to carry out a control action as a function of an information element which is transmitted by means of the communication terminal (404) and specifies whether at least one application (403) installed on the communication terminal (404) uses MMS as a transport medium for transmission of data
**characterized in that** the information element is a Boolean information element.

11. A method for operation of a server (102, 401) of a communication system (100), which communication system (100) has a communication terminal (404), wherein, according to the method, the server (102, 401) carries out a control action as a function of an information element which is transmitted by means of the communication terminal (404) and specifies whether at least one application (403) installed on the communication terminal (404) uses MMS as a transport medium for transmission of data,
**characterized in that** the information element is a Boolean information element.

12. A communication terminal (404) in a communication system (100) which communication system (100) has a server (102, 401), wherein the communication terminal (404) has a signaling device which is configured to transmit an information element which specifies whether at least one application (403) installed on the communication terminal (404) uses MMS as a transport medium for transmission of data, to the server (102, 401),
**characterized in that** the information element is a Boolean information element.

13. A method for operation of a communication terminal (404) of a communication system (100) which communication system (100) has a server (102, 401), wherein, according to the method, the communication terminal (404) transmits an information element which specifies whether at least one application (403) installed on the communication terminal (404) uses MMS as a transport medium for transmission of data, to the server (102, 401),
**characterized in that** the information element is a Boolean information element.

## Revendications

1. Système (100) de communication comprenant
un terminal (404) de communication et un serveur (102, 401), dans lequel
- le terminal (404) de communication comporte un dispositif de signalisation qui est conçu pour transmettre au serveur (102, 401) un élément d'information qui spécifie si au moins une application (403) MMS installée sur le terminal (404) de communication est utilisée comme support de transport pour la transmission de données ;
- le serveur (102, 401) comporte un dispositif de commande qui est conçu pour effectuer une action de commande en fonction de l'élément de l'information transmis,
**caractérisé en ce que** l'élément de l'information est un élément d'information booléen.

2. Système (100) de communication suivant la revendication 1, dans lequel le serveur (102, 401) comporte un dispositif de transmission, qui est conçu pour transmettre des messages au terminal (404) de communication, et a un dispositif de conversion, qui est conçu pour convertir des messages à transmettre au terminal (404) de communication et l'action de commande, l'activation ou la désactivation d'une conversion par le dispositif de conversion s'effectuent par des messages à transmettre au moyen du dispositif de transmission du serveur (102, 401) au terminal (404) de communication.

3. Système (100) de communication suivant la revendication 2, dans lequel l'action de commande comporte en outre la détermination des messages, à transmettre au moyen du dispositif de transmission du serveur (102, 401) au terminal (404) de communication, qui doivent être convertis par le dispositif de conversion.

4. Terminal (404) de communication suivant la revendication 2 ou 3, dans lequel le dispositif de conversion est conçu pour convertir des messages qui doivent être transmis au terminal (404) de communication au moyen du dispositif de transmission suivant un protocole de transmission multimédia.

5. Système (100) de communication suivant l'une des revendications 1 à 4, dans lequel le dispositif de signalisation est conçu pour transmettre au serveur (102, 401) l'élément d'information suivant un protocole de transmission multimédia.

6. Système (100) de communication suivant la revendication 4 ou 5, dans lequel le protocole de transmission multimédia est le protocole de transmission du MMS.

7. Système (100) de communication suivant l'une des revendications 1 à 6, dans lequel le dispositif de signalisation est conçu pour transmettre l'élément d'information au moyen d'un profil du terminal (404) de communication.

8. Système (100) de communication suivant la revendication 7, dans lequel le profil est conformé suivant la norme UA-prof.

9. Procédé de commande d'un système (100) de communication lequel système (100) de communication a un terminal (404) de communication et un serveur (102, 401) dans lequel suivant le procédé
- le terminal (404) de communication transmet au serveur (102, 401) un élément d'information qui spécifie si au moins une application (403) installée sur le terminal (404) de communication, utilise MMS comme support de transport pour la transmission de données,
- le serveur (102, 401) effectue en fonction de l'élément d'information transmis une action de commande,
**caractérisé en ce que** l'élément d'information est un élément d'information booléen.

10. Serveur (102, 401) d'un système (100) de communication qui a un terminal (404) de communication, le serveur (102, 401) ayant un dispositif de commande qui est conçu pour, en fonction d'un élément d'information qui est transmis au moyen du terminal (404) de communication et qui spécifie si au moins une application (403) d'installation sur le terminal (404) de communication utilise MMS comme support de transport pour la transmission de données, effectuer une action de commande,
**caractérisé en ce que** l'élément d'information est un élément d'information booléen.

11. Procédé pour faire fonctionner un serveur (102, 401) d'un système (100) de communication, lequel système (100) de communication a un terminal (404) de communication, dans lequel suivant le procédé le serveur (102, 401) effectue, en fonction d'un élément d'information qui est transmis au moyen du terminal (404) de communication et qui spécifie si au moins une application (403) installée sur le terminal (404) de communication utilise MMS comme support de transport pour la transmission de données, une action de commande,
**caractérisé en ce que** l'élément d'information est un élément d'information booléen.

12. Terminal (404) de communication d'un système (100) de communication, lequel système (100) de communication a un serveur (102, 401), dans lequel
le terminal (404) de communication a un dispositif de signalisation qui est conçu pour transmettre au serveur (102, 401) un élément d'information qui spécifie si au moins une application (403) installée sur le terminal (404) de communication utilise MMS comme support de transport pour transmission de données,
**caractérisé en ce que** l'élément d'information est un élément d'information booléen.

13. Procédé pour faire fonctionner un terminal (404) de communication d'un système (100) de communication, lequel le système (100) de communication a un serveur (102, 401), dans lequel suivant le procédé le terminal (404) de communication transmet au serveur (102, 401) un élément d'information qui spécifie si au moins une application (403) installée sur le terminal (404) de communication utilise MMS comme support de transport pour la transmission de données,
**caractérisé en ce que** l'élément d'information est un élément d'information booléen.
